(19) Europäisches Patentamt
European Patent Office
Office européen des brevets

(11) EP 2 964 688 B1

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **14702283.4**

(22) Anmeldetag: **04.02.2014**

(51) Int Cl.:
***C08G 65/336*** *(2006.01)* ***C08K 5/54*** *(2006.01)*
***C08L 23/00*** *(2006.01)* ***C08L 31/04*** *(2006.01)*

(86) Internationale Anmeldenummer:
**PCT/EP2014/052113**

(87) Internationale Veröffentlichungsnummer:
**WO 2014/135323 (12.09.2014 Gazette 2014/37)**

# (54) MERCAPTOSILAN-POLYMER-ABMISCHUNG

MERCAPTOSILANE POLYMER MIXTURE

MÉLANGES MERCAPTOSILANE-POLYMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2013 DE 102013203651**

(43) Veröffentlichungstag der Anmeldung:
**13.01.2016 Patentblatt 2016/02**

(73) Patentinhaber: **Evonik Degussa GmbH**
**45128 Essen (DE)**

(72) Erfinder:
- **PETERLE, Torsten**
**79369 Grenzach-Wyhlen (DE)**
- **BLUME, Anke**
**53919 Weilerswist (DE)**
- **MONKIEWICZ, Jaroslaw**
**79618 Rheinfelden (DE)**
- **KORCH, Andrea**
**50933 Köln (DE)**
- **TSCHERNJAEW, Juri**
**63743 Aschaffenburg (DE)**
- **KUNOWA, Kathrin**
**US-Joplin, Missouri 64804 (US)**
- **KLOSE, Michael**
**60389 Frankfurt am Main (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 2 433 812**
**EP-A1- 2 508 559**
**US-A- 3 453 248**
**US-A1- 2005 004 386**
**US-A1- 2006 161 015**
**US-A1- 2011 034 584**

EP 2 964 688 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft Mercaptosilan-Polymer-Abmischung, Verfahren zu deren Herstellung, sowie deren Verwendung.

In der Reifenindustrie werden teilweise Schwefelsilane eingesetzt um in Kombination mit Kieselsäure den Rollwiderstand, Naßrutschverhalten und den Abriebwiderstand zu verbessern. Die normalerweise eingesetzten Schwefelsilane sind flüssig und müssen deshalb durch vorhergehendes Abwiegen und Einschweißen des Flüssigsilans oder durch eine Flüssigdosierung direkt in den Mischer eingebracht werden. Um eine solche aufwendige Zugabe zu vermeiden (die meisten Kneter sind nicht mit einer Flüssigdosierung ausgestattet), können die Schwefelsilane auf einen Träger aufgezogen werden. Dabei soll der Träger nicht mit dem Schwefelsilan reagieren, damit die komplette Silanmenge in der Reifenmischung zur Verfügung steht.

Aus EP 1285926, EP 1683801 und EP 1829922 sind Mercaptosilane bzw. polysulfidische Silane mit Polyethergruppen bekannt. Die Silane können auch auf einem organischen Träger aufgezogen sein.

Ferner sind aus KR 850000081 Silan-/Füllstoffabmischungen und aus DE 102012205642 Mercaptosilan/Ruß-Abmischungen bekannt.

Des weiteren sind aus US 7078551 geblockte Mercaptosilane auf Träger bekannt.

Aus EP 2433812 A1, EP 2508559 A1 und US 2011/034584 A1 sind Kautschukmischungen enthaltend schwefelhaltige Organosiliciumverbindungen oder Azodicarbamide bekannt. Ferner ist aus US 3453248 A Mischungen aus Thermoplasten und Mercaptosilanen bekannt. Keines der Dokumente offenbart eine erfindungsgemäße Mercaptosilan-Polymer-Abmischung.

Nachteil der bekannten Mercaptosilan-/Trägerabmischungen ist eine Verschlechterung der Lagerstabilität, der Verarbeitbarkeit, des Verstärkungsverhaltens, der dynamischen Steifigkeit und/oder Dispergierbarkeit.

Aufgabe der vorliegenden Erfindung ist es, Abmischungen von Mercaptosilanen mit Polymeren zur Verfügung zu stellen, die eine gute Lagerstabilität, Verarbeitbarkeit, ein gutes Verstärkungsverhalten, eine gute dynamische Steifigkeit und Dispergierbarkeit aufweisen.

Gegenstand der Erfindung ist eine Mercaptosilan-Polymer-Abmischung, welche dadurch gekennzeichnet ist, dass diese mindestens ein Mercaptosilan der allgemeinen Formel I

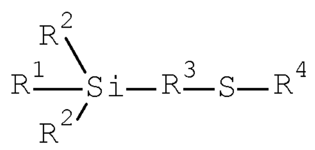

I,

wobei $R^1$ eine Alkylpolyethergruppe $-O-(R^5-O)_m-R^6$ ist, mit $R^5$ gleich oder verschieden, eine verzweigte oder unverzweigte, gesättigte oder ungesättigte, aliphatische zweibindige C1-C30 Kohlenwasserstoffgruppe, vorzugsweise $CH_2-CH_2$, $CH_2-CH(CH_3)$, $-CH(CH_3)-CH_2-$ oder $CH_2-CH_2-CH_2$, m im Mittel 1 bis 30, bevorzugt 2 bis 20, besonders bevorzugt 2 bis 15, ganz besonders bevorzugt 3 bis 10, außerordentlich bevorzugt 3,5 bis 7,9, ist, und $R^6$ aus mindestens 1, vorzugsweise mindestens 11, besonders bevorzugt mindestens 12, C-Atomen besteht und eine unsubstituierte oder substituierte, verzweigte oder unverzweigte einbindige Alkyl-, Alkenyl, Aryl oder Aralkylgruppe ist,

$R^2$ gleich oder verschieden und eine $R^1$-, C1-C12-Alkyl- oder $R^7O$-Gruppe ist, mit $R^7$ gleich H, Methyl, Ethyl, Propyl, C9-C30 verzweigten oder unverzweigten einbindigen Alkyl-, Alkenyl-, Aryl-, Aralkylgruppe oder $(R^8)_3Si$-Gruppe, mit $R^8$ gleich C1-C30 verzweigte oder unverzweigte Alkyl- oder Alkenyl-Gruppe,

$R^3$ eine verzweigte oder unverzweigte, gesättigte oder ungesättigte, aliphatische, aromatische oder gemischt aliphatische /aromatische zweibindige C1-C30, vorzugsweise C1-C6, besonders bevorzugt C3, Kohlenwasserstoffgruppe und

$R^4$ gleich H, CN oder $(C{=}O)-R^9$ ist, mit $R^9$ gleich einer verzweigten oder unverzweigten, gesättigten oder ungesättigten, aliphatischen, aromatischen oder gemischt aliphatischen /aromatischen einbindigen C1-C30, bevorzugt C5 bis C30, besonders bevorzugt C5 bis C20, ganz besonders bevorzugt C7 bis C15, außerordentlich bevorzugt C7 bis C11, Kohlenwasserstoffgruppe,

und mindestens ein Polymer, ausgewählt aus der Gruppe Polypropylen, Polyethylen, vorzugsweise HDPE, oder Mischungen der vorgenannten Polymeren,

enthält.

Die Mercaptosilan-Polymer-Abmischung kann mindestens 20 Gew.-%, vorzugsweise mindestens 25 Gew.-%, besonders bevorzugt 30 Gew.-% - 70 Gew.%, Mercaptosilan der allgemeinen Formel I, bezogen auf die Mercaptosilan-Polymer-Abmischung, enthalten.
Das Gewichtsverhältnis von Mercaptosilan der allgemeinen Formel I zu Polymer kann 30:70 bis 60:40, vorzugsweise 40:60 bis 50:50, betragen.
Das Polymer kann ein Molekulargewicht von 50.000-1.000.000 g/mol, vorzugsweise von 80.000-500.000 g/mol, besonders bevorzugt von 100.000-250.000 g/mol, haben (DIN EN ISO 16014-5: Kunststoffe - Bestimmung der durchschnittlichen Molmasse und der Molmassenverteilung von Polymeren mittels Gelpermeationschromatographie - Teil 5: Lichtstreudetektionsverfahren) .
Das Polymer kann eine Schmelztemperatur von 80 - 200 °C, vorzugsweise von 90 - 180 °C, haben (Differential Scanning Calorimetry - DSC Bestimmungsmethode DIN EN ISO 11357). Ganz besonders bevorzugt kann Polyethylen eine Schmelztemperatur von 105 - 140 °C und Polypropylen eine Schmelztemperatur von 140 - 175 °C haben.

Das Polymer kann eine Schüttdichte von 80 - 150 kg/$m^3$, vorzugsweise von 90 - 140 kg/$m^3$, haben (DIN EN ISO 60).
Das Polymer kann eine Schmelz-Volumenfließrate (MFR) von 0,2 - 30 g/10 min haben (ISO 1133: 190°C/2,16kg). Besonders bevorzugt kann Polyethylen eine Schmelz-Volumenfließrate von 1,0 - 5,0 g/10 min und Polypropylen eine Schmelz-Volumenfließrate von 20 - 30 g/10 min haben.

Das Polymer kann eine Glastemperatur von -80 - +10°C haben (ISO 1133). Besonders bevorzugt kann Polyethylen eine Glastemperatur von -80 - -60°C und Polypropylen eine Glastemperatur von -30 - +10°C haben.

Das Polymer Polyethylen kann ein HDPE sein. Das HDPE kann eine Dichte von 0,94 - 0,97 g/$cm^3$ haben.
Die Mercaptosilan-Polymer-Abmischung kann eine Schüttdichte von 80 - 900 kg/$m^3$ haben (DIN EN ISO 60).

Die Mercaptosilane der allgemeinen Formel I können Verbindungen sein, wobei $R^1$ eine Alkylpolyethergruppe $-O-(R^5-O)_m-R^6$ ist, mit $R^5$ gleich oder verschieden, eine verzweigte oder unverzweigte, gesättigte oder ungesättigte, aliphatische zweibindige C1-C30 Kohlenwasserstoffgruppe, m im Mittel 1 bis 30 ist, und $R^6$ aus mindestens 11 C-Atomen besteht und eine unsubstituierte oder substituierte, verzweigte oder unverzweigte einbindige Alkyl-, Alkenyl, Aryl oder Aralkylgruppe ist,
$R^2$ gleich und eine C1-C12-Alkyl- oder $R^7O$-Gruppe ist, mit $R^7$ gleich H, Ethyl, Propyl, C9-C30 verzweigten oder unverzweigten einbindigen Alkyl-, Alkenyl-, Aryl-, Aralkylgruppe oder $(R^8)_3Si$-Gruppe, mit $R^8$ gleich C1-C30 verzweigte oder unverzweigte Alkyl- oder Alkenyl-Gruppe,
$R^3$ eine verzweigte oder unverzweigte, gesättigte oder ungesättigte, aliphatische, aromatische oder gemischt aliphatische /aromatische zweibindige C1-C30 Kohlenwasserstoffgruppe und
$R^4$ gleich H, CN oder $(C=O)-R^9$ ist, mit $R^9$ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe.
Die Mercaptosilane der allgemeinen Formel I können Verbindungen sein, wobei $R^1$ gleich $-O-(C_2H_4-O)_5-C_{11}H_{23}$, $-O-(C_2H_4-O)_5-C_{12}H_{25}$, $-O-(C_2H_4-O)_5-C_{13}H_{27}$, $-O-(C_2H_4-O)_5-C_{14}H_{29}$, $-O-(C_2H_4-O)_5-C_{15}H_{31}$, $-O-(C_2H_4-O)_3-C_{13}H_{27}$, $-O-(C_2H_4-O)_4-C_{13}H_{27}$, $-O-(C_2H_4-O)_6-C_{13}H_{27}$, $-O-(C_2H_4-O)_7-C_{13}H_{27}$, $-O-(CH_2CH_2-O)_5-(CH_2)_{10}CH_3$, $-O-(CH_2CH_2-O)_5-(CH_2)_{11}CH_3$, $-O-(CH_2CH_2-O)_5-(CH_2)_{12}CH_3$, $-O-(CH_2CH_2-O)_5-(CH_2)_{13}CH_3$, $-O-(CH_2CH_2-O)_5-(CH_2)_{14}CH_3$, $-O-(CH_2CH_2-O)_3-(CH_2)_{12}CH_3$, $-O-(CH_2CH_2-O)_4-(CH_2)_{12}CH_3$, $-O-(CH_2CH_2-O)_6-(CH_2)_{12}CH_3$, $-O-(CH_2CH_2-O)_7-(CH_2)_{12}CH_3$,

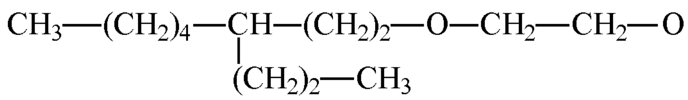

,

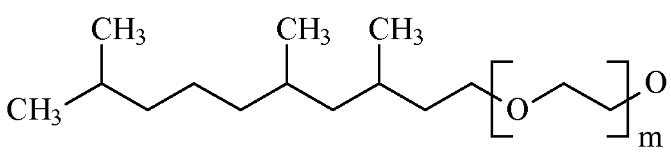

,

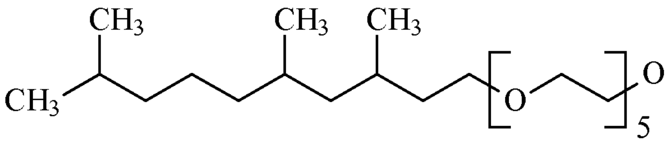

,

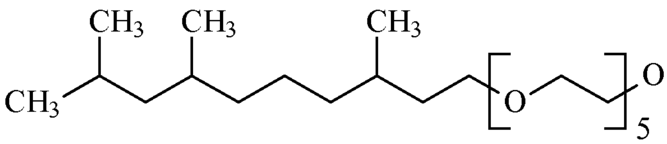

oder

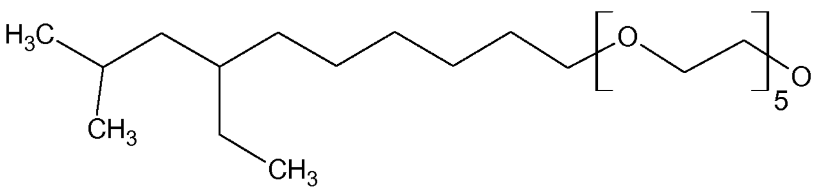

ist,

$R^2$ verschieden und eine $R^1$-, C1-C12-Alkyl- oder $R^7O$-Gruppe ist, mit $R^7$ gleich H, Methyl, Ethyl, Propyl, C9-C30 verzweigten oder unverzweigten einbindigen Alkyl-, Alkenyl-, Aryl-, Aralkylgruppe oder $(R^8)_3Si$-Gruppe, mit $R^8$ gleich C1-C30 verzweigte oder unverzweigte Alkyl- oder Alkenyl-Gruppe,

$R^3$ eine verzweigte oder unverzweigte, gesättigte oder ungesättigte, aliphatische, aromatische oder gemischt aliphatische /aromatische zweibindige C1-C30 Kohlenwasserstoffgruppe und

$R^4$ gleich H, CN oder (C=O)-$R^9$ ist, mit $R^9$ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe.

Die Mercaptosilane der allgemeinen Formel I können Verbindungen sein, wobei $R^1$ gleich $-O-(C_2H_4-O)_5-C_{11}H_{23}$, $-O-(C_2H_4-O)_5-C_{12}H_{25}$, $-O-(C_2H_4-O)_5-C_{13}H_{27}$, $-O-(C_2H_4-O)_5-C_{14}H_{29}$, $-O-(C_2H_4-O)_5-C_{15}H_{31}$, $-O-(C_2H_4-O)_3-C_{13}H_{27}$, $-O-(C_2H_4-O)_4-C_{13}H_{27}$, $-O-(C_2H_4-O)_6-C_{13}H_{27}$, $-O-(C_2H_4-O)_7-C_{13}H_{27}$, $-O-(CH_2CH_2-O)_5-(CH_2)_{10}CH_3$, $-O-(CH_2CH_2-O)_5-(CH_2)_{11}CH_3$, $-O-(CH_2CH_2-O)_5-(CH_2)_{12}CH_3$, $-O-(CH_2CH_2-O)_5-(CH_2)_{13}CH_3$, $-O-(CH_2CH_2-O)_5-(CH_2)_{14}CH_3$, $-O-(CH_2CH_2-O)_3-(CH_2)_{12}CH_3$, $-O-(CH_2CH_2-O)_4-(CH_2)_{12}CH_3$, $-O-(CH_2CH_2-O)_6-(CH_2)_{12}CH_3$, $-O-(CH_2CH_2-O)_7-(CH_2)_{12}CH_3$,

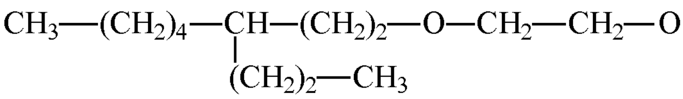

,

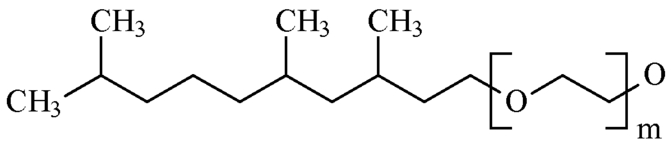

,

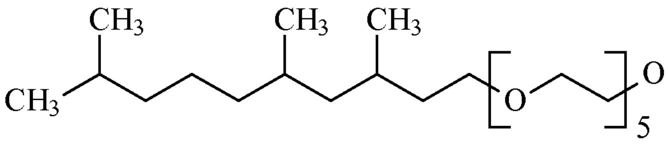

,

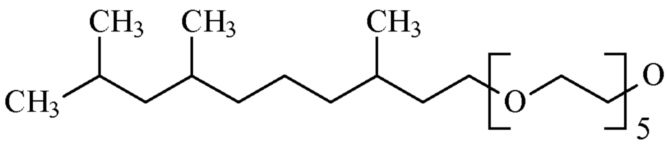

oder

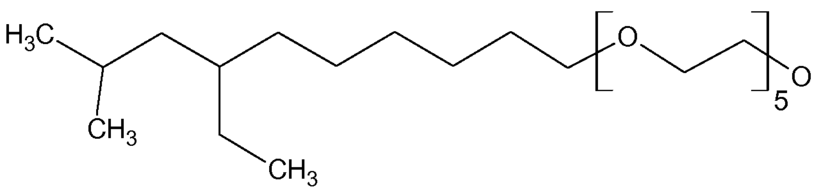

ist,

$R^2$ gleich $R^1$ -Gruppe ist,
$R^3$ eine verzweigte oder unverzweigte, gesättigte oder ungesättigte, aliphatische, aromatische oder gemischt aliphatische /aromatische zweibindige C1-C30 Kohlenwasserstoffgruppe und
$R^4$ gleich H, CN oder (C=O)-$R^9$ ist, mit $R^9$ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe.

Bevorzugte Verbindungen der Formel I mit $R^4$= H können sein:

$[(C_{11}H_{23}O-(CH_2-CH_2O)_2](EtO)_2Si(CH_2)_3SH$,
$[(C_{11}H_{23}O-(CH_2-CH_2O)_3](EtO)_2Si(CH_2)_3SH$,
$[(C_{11}H_{23}O-(CH_2-CH_2O)_4](EtO)_2Si(CH_2)_3SH$,
$[(C_{11}H_{23}O-(CH_2-CH_2O)_5](EtO)_2Si(CH_2)_3SH$,
$[(C_{11}H_{23}O-(CH_2-CH_2O)_6](EtO)_2Si(CH_2)_3SH$,

$[(C_{12}H_{25}O-(CH_2-CH_2O)_2](EtO)_2Si(CH_2)_3SH$,
$[(C_{12}H_{25}O-(CH_2-CH_2O)_3](EtO)_2Si(CH_2)_3SH$,
$[(C_{12}H_{25}O-(CH_2-CH_2O)_4](EtO)_2Si(CH_2)_3SH$,
$[(C_{12}H_{25}O-(CH_2-CH_2O)_5](EtO)_2Si(CH_2)_3SH$,
$[(C_{12}H_{25}O-(CH_2-CH_2O)_6](EtO)_2Si(CH_2)_3SH$,

$[(C_{13}H_{27}O-(CH_2-CH_2O)_2](EtO)_2Si(CH_2)_3SH$,
$[(C_{13}H_{27}O-(CH_2-CH_2O)_3](EtO)_2Si(CH_2)_3SH$,
$[(C_{13}H_{27}O-(CH_2-CH_2O)_4](EtO)_2Si(CH_2)_3SH$,
$[(C_{13}H_{27}O-(CH_2-CH_2O)_5](EtO)_2Si(CH_2)_3SH$,
$[(C_{13}H_{27}O-(CH_2-CH_2O)_6](EtO)_2Si(CH_2)_3SH$,

$[(C_{14}H_{29}O-(CH_2-CH_2O)_2](EtO)_2Si(CH_2)_3SH$,
$[(C_{14}H_{29}O-(CH_2-CH_2O)_3](EtO)_2Si(CH_2)_3SH$,
$[(C_{14}H_{29}O-(CH_2-CH_2O)_4](EtO)_2Si(CH_2)_3SH$,
$[(C_{14}H_{29}O-(CH_2-CH_2O)_5](EtO)_2Si(CH_2)_3SH$,
$[(C_{14}H_{29}O-(CH_2-CH_2O)_6](EtO)_2Si(CH_2)_3SH$,

$[(C_{15}H_{31}O-(CH_2-CH_2O)_2](EtO)_2Si(CH_2)_3SH$,
$[(C_{15}H_{31}O-(CH_2-CH_2O)_3](EtO)_2Si(CH_2)_3SH$,
$[(C_{15}H_{31}O-(CH_2-CH_2O)_4](EtO)_2Si(CH_2)_3SH$,
$[(C_{15}H_{31}O-(CH_2-CH_2O)_5](EtO)_2Si(CH_2)_3SH$,
$[(C_{15}H_{31}O-(CH_2-CH_2O)_6](EtO)_2Si(CH_2)_3SH$,

$[(C_{16}H_{33}O-(CH_2-CH_2O)_2](EtO)_2Si(CH_2)_3SH$,
$[(C_{16}H_{33}O-(CH_2-CH_2O)_3](EtO)_2Si(CH_2)_3SH$,
$[(C_{16}H_{33}O-(CH_2-CH_2O)_4](EtO)_2Si(CH_2)_3SH$,
$[(C_{16}H_{33}O-(CH_2-CH_2O)_5](EtO)_2Si(CH_2)_3SH$,
$[(C_{16}H_{33}O-(CH_2-CH_2O)_6](EtO)_2Si(CH_2)_3SH$,

$[(C_{17}H_{35}O-(CH_2-CH_2O)_2](EtO)_2Si(CH_2)_3SH$,
$[(C_{17}H_{35}O-(CH_2-CH_2O)_3](EtO)_2Si(CH_2)_3SH$,
$[(C_{17}H_{35}O-(CH_2-CH_2O)_4](EtO)_2Si(CH_2)_3SH$,
$[(C_{17}H_{35}O-(CH_2-CH_2O)_5](EtO)_2Si(CH_2)_3SH$,
$[(C_{17}H_{35}O-(CH_2-CH_2O)_6](EtO)_2Si(CH_2)_3SH$,

$[(C_{11}H_{23}O-(CH_2-CH_2O)_2]_2(EtO)Si(CH_2)_3SH$,
$[(C_{11}H_{23}O-(CH_2-CH_2O)_3]_2(EtO)Si(CH_2)_3SH$,
$[(C_{11}H_{23}O-(CH_2-CH_2O)_4]_2(EtO)Si(CH_2)_3SH$,
$[(C_{11}H_{23}O-(CH_2-CH_2O)_5]_2(EtO)Si(CH_2)_3SH$,
$[(C_{11}H_{23}O-(CH_2-CH_2O)_6]_2(EtO)Si(CH_2)_3SH$,

$[(C_{12}H_{25}O-(CH_2-CH_2O)_2]_2(EtO)Si(CH_2)_3SH$,
$[(C_{12}H_{25}O-(CH_2-CH_2O)_3]_2(EtO)Si(CH_2)_3SH$,
$[(C_{12}H_{25}O-(CH_2-CH_2O)_4]_2(EtO)Si(CH_2)_3SH$,
$[(C_{12}H_{25}O-(CH_2-CH_2O)_5]_2(EtO)Si(CH_2)_3SH$,
$[(C_{12}H_{25}O-(CH_2-CH_2O)_6]_2(EtO)Si(CH_2)_3SH$,

$[(C_{13}H_{27}O-(CH_2-CH_2O)_2]_2(EtO)Si(CH_2)_3SH$,
$[(C_{13}H_{27}O-(CH_2-CH_2O)_3]_2(EtO)Si(CH_2)_3SH$,
$[(C_{13}H_{27}O-(CH_2-CH_2O)_4]_2(EtO)Si(CH_2)_3SH$,
$[(C_{13}H_{27}O-(CH_2-CH_2O)_5]_2(EtO)Si(CH_2)_3SH$,
$[(C_{13}H_{27}O-(CH_2-CH_2O)_6]_2(EtO)Si(CH_2)_3SH$,

$[(C_{14}H_{29}O-(CH_2-CH_2O)_2]_2(EtO)Si(CH_2)_3SH$,
$[(C_{14}H_{29}O-(CH_2-CH_2O)_3]_2(EtO)Si(CH_2)_3SH$,
$[(C_{14}H_{29}O-(CH_2-CH_2O)_4]_2(EtO)Si(CH_2)_3SH$,
$[(C_{14}H_{29}O-(CH_2-CH_2O)_5]_2(EtO)Si(CH_2)_3SH$,
$[(C_{14}H_{29}O-(CH_2-CH_2O)_6]_2(EtO)Si(CH_2)_3SH$,

$[(C_{15}H_{31}O-(CH_2-CH_2O)_2]_2(EtO)Si(CH_2)_3SH$,
$[(C_{15}H_{31}O-(CH_2-CH_2O)_3]_2(EtO)Si(CH_2)_3SH$,
$[(C_{15}H_{31}O-(CH_2-CH_2O)_4]_2(EtO)Si(CH_2)_3SH$,
$[(C_{15}H_{31}O-(CH_2-CH_2O)_5]_2(EtO)Si(CH_2)_3SH$,
$[(C_{15}H_{31}O-(CH_2-CH_2O)_6]_2(EtO)Si(CH_2)_3SH$,

$[(C_{16}H_{33}O-(CH_2-CH_2O)_2]_2(EtO)Si(CH_2)_3SH$,
$[(C_{16}H_{33}O-(CH_2-CH_2O)_3]_2(EtO)Si(CH_2)_3SH$,
$[C_{16}H_{33}O-(CH_2-CH_2O)_4]_2(EtO)Si(CH_2)_3SH$,
$[C_{16}H_{33}O-(CH_2-CH_2O)_5]_2(EtO)Si(CH_2)_3SH$,
$[C_{16}H_{33}O-(CH_2-CH_2O)_6]_2(EtO)Si(CH_2)_3SH$,

$[C_{17}H_{35}O-(CH_2-CH_2O)_2]_2(EtO)Si(CH_2)_3SH$,
$[C_{17}H_{35}O-(CH_2-CH_2O)_3]_2(EtO)Si(CH_2)_3SH$,
$[C_{17}H_{35}O-(CH_2-CH_2O)_4]_2(EtO)Si(CH_2)_3SH$,
$[(C_{17}H_{35}O-(CH_2-CH_2O)_5]_2(EtO)Si(CH_2)_3SH$,

$[(C_{17}H_{35}O\text{-}(CH_2\text{-}CH_2O)_6]_2(EtO)Si(CH_2)_3SH$,

$[(C_{11}H_{23}O\text{-}(CH_2\text{-}CH_2O)_2]_3Si(CH_2)_3SH$,
$[(C_{11}H_{23}O\text{-}(CH_2\text{-}CH_2O)_3]_3Si(CH_2)_3SH$,
$[(C_{11}H_{23}O\text{-}(CH_2\text{-}CH_2O)_4]_3Si(CH_2)_3SH$,
$[(C_{11}H_{23}O\text{-}(CH_2\text{-}CH_2O)_5]_3Si(CH_2)_3SH$,
$[(C_{11}H_{23}O\text{-}(CH_2\text{-}CH_2O)_6]_3Si(CH_2)_3SH$,

$[(C_{12}H_{25}O\text{-}(CH_2\text{-}CH_2O)_2]_3Si(CH_2)_3SH$,
$[(C_{12}H_{25}O\text{-}(CH_2\text{-}CH_2O)_3]_3Si(CH_2)_3SH$,
$[(C_{12}H_{25}O\text{-}(CH_2\text{-}CH_2O)_4]_3Si(CH_2)_3SH$,
$[(C_{12}H_{25}O\text{-}(CH_2\text{-}CH_2O)_5]_3Si(CH_2)_3SH$,
$[(C_{12}H_{25}O\text{-}(CH_2\text{-}CH_2O)_6]_3Si(CH_2)_3SH$,

$[(C_{13}H_{27}O\text{-}(CH_2\text{-}CH_2O)_2]_3Si(CH_2)_3SH$,
$[(C_{13}H_{27}O\text{-}(CH_2\text{-}CH_2O)_3]_3Si(CH_2)_3SH$,
$[(C_{13}H_{27}O\text{-}(CH_2\text{-}CH_2O)_4]_3Si(CH_2)_3SH$,
$[(C_{13}H_{27}O\text{-}(CH_2\text{-}CH_2O)_5]_3Si(CH_2)_3SH$,
$[(C_{13}H_{27}O\text{-}(CH_2\text{-}CH_2O)_6]_3Si(CH_2)_3SH$,

$[(C_{14}H_{29}O\text{-}(CH_2\text{-}CH_2O)_2]_3Si(CH_2)_3SH$,
$[(C_{14}H_{29}O\text{-}(CH_2\text{-}CH_2O)_3]_3Si(CH_2)_3SH$,
$[(C_{14}H_{29}O\text{-}(CH_2\text{-}CH_2O)_4]_3Si(CH_2)_3SH$,
$[(C_{14}H_{29}O\text{-}(CH_2\text{-}CH_2O)_5]_3Si(CH_2)_3SH$,
$[(C_{14}H_{29}O\text{-}(CH_2\text{-}CH_2O)_6]_3Si(CH_2)_3SH$,

$[(C_{15}H_{31}O\text{-}(CH_2\text{-}CH_2O)_2]_3Si(CH_2)_3SH$,
$[(C_{15}H_{31}O\text{-}(CH_2\text{-}CH_2O)_3]_3Si(CH_2)_3SH$,
$[(C_{15}H_{31}O\text{-}(CH_2\text{-}CH_2O)_4]_3Si(CH_2)_3SH$,
$[(C_{15}H_{31}O\text{-}(CH_2\text{-}CH_2O)_5]_3Si(CH_2)_3SH$,
$[(C_{15}H_{31}O\text{-}(CH_2\text{-}CH_2O)_6]_3Si(CH_2)_3SH$,

$[(C_{16}H_{33}O\text{-}(CH_2\text{-}CH_2O)_2]_3Si(CH_2)_3SH$,
$[(C_{16}H_{33}O\text{-}(CH_2\text{-}CH_2O)_3]_3Si(CH_2)_3SH$,
$[(C_{16}H_{33}O\text{-}(CH_2\text{-}CH_2O)_4]_3Si(CH_2)_3SH$,
$[(C_{16}H_{33}O\text{-}(CH_2\text{-}CH_2O)_5]_3Si(CH_2)_3SH$,
$[(C_{16}H_{33}O\text{-}(CH_2\text{-}CH_2O)_6]_3Si(CH_2)_3SH$,

$[(C_{17}H_{35}O\text{-}(CH_2\text{-}CH_2O)_2]_3Si(CH_2)_3SH$,
$[(C_{17}H_{35}\text{-}(CH_2\text{-}CH_2O)_3]_3Si(CH_2)_3SH$,
$[(C_{17}H_{35}O\text{-}(CH_2\text{-}CH_2O)_4]_3Si(CH_2)_3SH$,
$[(C_{17}H_{35}O\text{-}(CH_2\text{-}CH_2O)_5]_3Si(CH_2)_3SH$,
$[(C_{17}H_{35}O\text{-}(CH_2\text{-}CH_2O)_6]_3Si(CH_2)_3SH$,

$[(C_{11}H_{23}O\text{-}(CH_2\text{-}CH_2O)_2](EtO)_2Si\text{-}CH_2\text{-}CH(CH_3)\text{-}CH_2\text{-}SH$,
$[(C_{11}H_{23}O\text{-}(CH_2\text{-}CH_2O)_3](EtO)_2Si\text{-}CH_2\text{-}CH(CH_3)\text{-}CH_2\text{-}SH$,
$[(C_{11}H_{23}O\text{-}(CH_2\text{-}CH_2O)_4](EtO)_2Si\text{-}CH_2\text{-}CH(CH_3)\text{-}CH_2\text{-}SH$,
$[(C_{11}H_{23}O\text{-}(CH_2\text{-}CH_2O)_5](EtO)_2Si\text{-}CH_2\text{-}CH(CH_3)\text{-}CH_2\text{-}SH$,
$[(C_{11}H_{23}O\text{-}(CH_2\text{-}CH_2O)_6](EtO)_2Si\text{-}CH_2\text{-}CH(CH_3)\text{-}CH_2\text{-}SH$,

$[(C_{12}H_{25}O\text{-}(CH_2\text{-}CH_2O)_2](EtO)_2Si\text{-}CH_2\text{-}CH(CH_3)\text{-}CH_2\text{-}SH$,
$[(C_{12}H_{25}O\text{-}(CH_2\text{-}CH_2O)_3](EtO)_2Si\text{-}CH_2\text{-}CH(CH_3)\text{-}CH_2\text{-}SH$,
$[(C_{12}H_{25}O\text{-}(CH_2\text{-}CH_2O)_4](EtO)_2Si\text{-}CH_2\text{-}CH(CH_3)\text{-}CH_2\text{-}SH$,
$[(C_{12}H_{25}O\text{-}(CH_2\text{-}CH_2O)_5](EtO)_2Si\text{-}CH_2\text{-}CH(CH_3)\text{-}CH_2\text{-}SH$,
$[(C_{12}H_{25}O\text{-}(CH_2\text{-}CH_2O)_6](EtO)_2Si\text{-}CH_2\text{-}CH(CH_3)\text{-}CH_2\text{-}SH$,

$[(C_{13}H_{27}O\text{-}(CH_2\text{-}CH_2O)_2](EtO)_2Si\text{-}CH_2\text{-}CH(CH_3)\text{-}CH_2\text{-}SH$,
$[(C_{13}H_{27}O\text{-}(CH_2\text{-}CH_2O)_3](EtO)_2Si\text{-}CH_2\text{-}CH(CH_3)\text{-}CH_2\text{-}SH$,

$[(C_{13}H_{27}O-(CH_2-CH_2O)_4](EtO)_2Si-CH_2-CH(CH_3)-CH_2-SH$,
$[(C_{13}H_{27}O-(CH_2-CH_2O)_5](EtO)_2Si-CH_2-CH(CH_3)-CH_2-SH$,
$[(C_{13}H_{27}O-(CH_2-CH_2O)_6](EtO)_2Si-CH_2-CH(CH_3)-CH_2-SH$,

$[(C_{14}H_{29}O-(CH_2-CH_2O)_2](EtO)_2Si-CH_2-CH(CH_3)-CH_2-SH$,
$[(C_{14}H_{29}O-(CH_2-CH_2O)_3](EtO)_2Si-CH_2-CH(CH_3)-CH_2-SH$,
$[(C_{14}H_{29}O-(CH_2-CH_2O)_4](EtO)_2Si-CH_2-CH(CH_3)-CH_2-SH$,
$[(C_{14}H_{29}O-(CH_2-CH_2O)_5](EtO)_2Si-CH_2-CH(CH_3)-CH_2-SH$,
$[(C_{14}H_{29}O-(CH_2-CH_2O)_6](EtO)_2Si-CH_2-CH(CH_3)-CH_2-SH$,

$[(C_{15}H_{31}O-(CH_2-CH_2O)_2](EtO)_2Si-CH_2-CH(CH_3)-CH_2-SH$,
$[(C_{15}H_{31}O-(CH_2-CH_2O)_3](EtO)_2Si-CH_2-CH(CH_3)-CH_2-SH$,
$[(C_{15}H_{31}O-(CH_2-CH_2O)_4](EtO)_2Si-CH_2-CH(CH_3)-CH_2-SH$,
$[(C_{15}H_{31}O-(CH_2-CH_2O)_5](EtO)_2Si-CH_2-CH(CH_3)-CH_2-SH$,
$[(C_{15}H_{31}O-(CH_2-CH_2O)_6](EtO)_2Si-CH_2-CH(CH_3)-CH_2-SH$,

$[(C_{16}H_{33}O-(CH_2-CH_2O)_2](EtO)_2Si-CH_2-CH(CH_3)-CH_2-SH$,
$[(C_{16}H_{33}O-(CH_2-CH_2O)_3](EtO)_2Si-CH_2-CH(CH_3)-CH_2-SH$,
$[(C_{16}H_{33}O-(CH_2-CH_2O)_4](EtO)_2Si-CH_2-CH(CH_3)-CH_2-SH$,
$[(C_{16}H_{33}O-(CH_2-CH_2O)_5](EtO)_2Si-CH_2-CH(CH_3)-CH_2-SH$,
$[(C_{16}H_{33}O-(CH_2-CH_2O)_6](EtO)_2Si-CH_2-CH(CH_3)-CH_2-SH$,

$[(C_{17}H_{35}O-(CH_2-CH_2O)_2](EtO)_2Si-CH_2-CH(CH_3)-CH_2-SH$,
$[(C_{17}H_{35}O-(CH_2-CH_2O)_3](EtO)_2Si-CH_2-CH(CH_3)-CH_2-SH$,
$[(C_{17}H_{35}O-(CH_2-CH_2O)_4](EtO)_2Si-CH_2-CH(CH_3)-CH_2-SH$,
$[(C_{17}H_{35}O-(CH_2-CH_2O)_5](EtO)_2Si-CH_2-CH(CH_3)-CH_2-SH$,
$[(C_{17}H_{35}O-(CH_2-CH_2O)_6](EtO)_2Si-CH_2-CH(CH_3)-CH_2-SH$,

$[(C_{11}H_{23}O-(CH_2-CH_2O)_2]_2(EtO)Si-CH_2-CH(CH_3)-CH_2-SH$,
$[(C_{11}H_{23}O-(CH_2-CH_2O)_3]_2(EtO)Si-CH_2-CH(CH_3)-CH_2-SH$,
$[(C_{11}H_{23}O-(CH_2-CH_2O)_4]_2(EtO)Si-CH_2-CH(CH_3)-CH_2-SH$,
$[(C_{11}H_{23}O-(CH_2-CH_2O)_5]_2(EtO)Si-CH_2-CH(CH_3)-CH_2-SH$,
$[(C_{11}H_{23}O-(CH_2-CH_2O)_6]_2(EtO)Si-CH_2-CH(CH_3)-CH_2-SH$,

$[(C_{12}H_{25}O-(CH_2-CH_2O)_2]_2(EtO)Si-CH_2-CH(CH_3)-CH_2-SH$,
$[(C_{12}H_{25}O-(CH_2-CH_2O)_3]_2(EtO)Si-CH_2-CH(CH_3)-CH_2-SH$,
$[(C_{12}H_{25}O-(CH_2-CH_2O)_4]_2(EtO)Si-CH_2-CH(CH_3)-CH_2-SH$,
$[(C_{12}H_{25}O-(CH_2-CH_2O)_5]_2(EtO)Si-CH_2-CH(CH_3)-CH_2-SH$,
$[(C_{12}H_{25}O-(CH_2-CH_2O)_6]_2(EtO)Si-CH_2-CH(CH_3)-CH_2-SH$,

$[(C_{13}H_{27}O-(CH_2-CH_2O)_2]_2(EtO)Si-CH_2-CH(CH_3)-CH_2-SH$,
$[(C_{13}H_{27}O-(CH_2-CH_2O)_3]_2(EtO)Si-CH_2-CH(CH_3)-CH_2-SH$,
$[(C_{13}H_{27}O-(CH_2-CH_2O)_4]_2(EtO)Si-CH_2-CH(CH_3)-CH_2-SH$,
$[(C_{13}H_{27}O-(CH_2-CH_2O)_5]_2(EtO)Si-CH_2-CH(CH_3)-CH_2-SH$,
$[(C_{13}H_{27}O-(CH_2-CH_2O)_6]_2(EtO)Si-CH_2-CH(CH_3)-CH_2-SH$,

$[(C_{14}H_{29}O-(CH_2-CH_2O)_2]_2(EtO)Si-CH_2-CH(CH_3)-CH_2-SH$,
$[(C_{14}H_{29}O-(CH_2-CH_2O)_3]_2(EtO)Si-CH_2-CH(CH_3)-CH_2-SH$,
$[(C_{14}H_{29}O-(CH_2-CH_2O)_4]_2(EtO)Si-CH_2-CH(CH_3)-CH_2-SH$,
$[(C_{14}H_{29}O-(CH_2-CH_2O)_5]_2(EtO)Si-CH_2-CH(CH_3)-CH_2-SH$,
$[(C_{14}H_{29}O-(CH_2-CH_2O)_6]_2(EtO)Si-CH_2-CH(CH_3)-CH_2-SH$,

$[(C_{15}H_{31}O-(CH_2-CH_2O)_2]_2(EtO)Si-CH_2-CH(CH_3)-CH_2-SH$,
$[(C_{15}H_{31}O-(CH_2-CH_2O)_3]_2(EtO)Si-CH_2-CH(CH_3)-CH_2-SH$,
$[(C_{15}H_{31}O-(CH_2-CH_2O)_4]_2(EtO)Si-CH_2-CH(CH_3)-CH_2-SH$,
$[(C_{15}H_{31}O-(CH_2-CH_2O)_5]_2(EtO)Si-CH_2-CH(CH_3)-CH_2-SH$,
$[(C_{15}H_{31}O-(CH_2-CH_2O)_6]_2(EtO)Si-CH_2-CH(CH_3)-CH_2-SH$,

$[(C_{16}H_{33}O-(CH_2-CH_2O)_2]_2(EtO)Si-CH_2-CH(CH_3)-CH_2-SH$,
$[(C_{16}H_{33}O-(CH_2-CH_2O)_3]_2(EtO)Si-CH_2-CH(CH_3)-CH_2-SH$,
$[(C_{16}H_{33}O-(CH_2-CH_2O)_4]_2(EtO)Si-CH_2-CH(CH_3)-CH_2-SH$,
$[(C_{16}H_{33}O-(CH_2-CH_2O)_5]_2(EtO)Si-CH_2-CH(CH_3)-CH_2-SH$,
$[(C_{16}H_{33}O-(CH_2-CH_2O)_6]_2(EtO)Si-CH_2-CH(CH_3)-CH_2-SH$,

$[(C_{17}H_{35}O-(CH_2-CH_2O)_2]_2(EtO)Si-CH_2-CH(CH_3)-CH_2-SH$,
$[(C_{17}H_{35}O-(CH_2-CH_2O)_3]_2(EtO)Si-CH_2-CH(CH_3)-CH_2-SH$,
$[(C_{17}H_{35}O-(CH_2-CH_2O)_4]_2(EtO)Si-CH_2-CH(CH_3)-CH_2-SH$,
$[(C_{17}H_{35}O-(CH_2-CH_2O)_5]_2(EtO)Si-CH_2-CH(CH_3)-CH_2-SH$,
$[(C_{17}H_{35}O-(CH_2-CH_2O)_6]_2(EtO)Si-CH_2-CHCH_3)-CH_2-SH$,

$[(C_{11}H_{23}O-(CH_2-CH_2O)_2]_3Si-CH_2-CH(CH_3)-CH_2-SH$,
$[(CH_{23}O-(CH_2-CH_2O)_3]_3Si-CH_2-CH(CH_3)-CH_2-SH$,
$[(CH_{23}O-(CH_2-CH_2O)_4]_3Si-CH_2-CH(CH_3)-CH_2-SH$,
$[(CH_{23}O-(CH_2-CH_2O)_5]_3Si-CH_2-CH(CH_3)-CH_2-SH$,
$[(CH_{23}O-(CH_2-CH_2O)_6]_3Si-CH_2-CH(CH_3)-CH_2-SH$,

$[(C_{12}H_{25}O-(CH_2-CH_2O)_2]_3Si-CH_2-CH(CH_3)-CH_2-SH$,
$[(C_{12}H_{25}O-(CH_2-CH_2O)_3]_3Si-CH_2-CH(CH_3)-CH_2-SH$,
$[(C_{12}H_{25}O-(CH_2-CH_2O)_4]_3Si-CH_2-CH(CH_3)-CH_2-SH$,
$[(C_{12}H_{25}O-(CH_2-CH_2O)_5]_3Si-CH_2-CH(CH_3)-CH_2-SH$,
$[(C_{12}H_{25}O-(CH_2-CH_2O)_6]_3Si-CH_2-CH(CH_3)-CH_2-SH$,

$[(C_{13}H_{27}O- (CH_2-CH_2O)_2]_3Si-CH_2-CH(CH_3)-CH_2-SH$,
$[(C_{13}H_{27}O-(CH_2-CH_2O)_3]_3Si-CH_2-CH(CH_3)-CH_2-SH$,
$[(C_{13}H_{27}O-(CH_2-CH_2O)_4]_3Si-CH_2-CH(CH_3)-CH_2-SH$,
$[(C_{13}H_{27}O-(CH_2-CH_2O)_5]_3Si-CH_2-CH(CH_3)-CH_2-SH$,
$[(C_{13}H_{27}O-(CH_2-CH_2O)_6]_3Si-CH_2-CH(CH_3)-CH_2-SH$,

$[(C_{14}H_{29}O-(CH_2-CH_2O)_2]_3Si-CH_2-CH(CH_3)-CH_2-SH$,
$[(C_{14}H_{29}O-(CH_2-CH_2O)_3]_3Si-CH_2-CH(CH_3)-CH_2-SH$,
$[(C_{14}H_{29}O-(CH_2-CH_2O)_4]_3Si-CH_2-CH(CH_3)-CH_2-SH$,
$[(C_{14}H_{29}O-(CH_2-CH_2O)_5]_3Si-CH_2-CH(CH_3)-CH_2-SH$,
$[(C_{14}H_{29}O-(CH_2-CH_2O)_6]_3Si-CH_2-CH(CH_3)-CH_2-SH$.

$[(C_{15}H_{31}O-(CH_2-CH_2O)_2]_3Si-CH_2-CH(CH_3)-CH_2-SH$,
$[(C_{15}H_{31}O-(CH_2-CH_2O)_3]_3Si-CH_2-CH(CH_3)-CH_2-SH$,
$[(C_{15}H_{31}O-(CH_2-CH_2O)_4]_3Si-CH_2-CH(CH_3)-CH_2-SH$,
$[(C_{15}H_{31}O-(CH_2-CH_2O)_5]_3Si-CH_2-CH(CH_3)-CH_2-SH$,
$[(C_{15}H_{31}O-(CH_2-CH_2O)_6]_3Si-CH_2-CH(CH_3)-CH_2-SH$,

$[(C_{16}H_{33}O-(CH_2-CH_2O)_2]_3Si-CH_2-CH(CH_3)-CH_2-SH$,
$[(C_{16}H_{33}O-(CH_2-CH_2O)_3]_3Si-CH_2-CH(CH_3)-CH_2-SH$,
$[(C_{16}H_{33}O-(CH_2-CH_2O)_4]_3Si-CH_2-CH(CH_3)-CH_2-SH$,
$[(C_{16}H_{33}O-(CH_2-CH_2O)_5]_3Si-CH_2-CH(CH_3)-CH_2-SH$,
$[(C_{16}H_{33}O-(CH_2-CH_2O)_6]_3Si-CH_2-CH(CH_3)-CH_2-SH$,

$[(C_{17}H_{35}O-(CH_2-CH_2O)_2]_3Si-CH_2-CH(CH_3)-CH_2-SH$,
$[(C_{17}H_{35}O-(CH_2-CH_2O)_3]_3Si-CH_2-CH(CH_3)-CH_2-SH$,
$[(C_{17}H_{35}O-(CH_2-CH_2O)_4]_3Si-CH_2-CH(CH_3)-CH_2-SH$,
$[(C_{17}H_{35}O-(CH_2-CH_2O)_5]_3Si-CH_2-CH(CH_3)-CH_2-SH$ oder
$[(C_{17}H_{35}O-(CH_2-CH_2O)_6]_3Si-CH_2-CH(CH_3)-CH_2-SH$, wobei $R^6$ verzweigt oder unverzweigt sein kann.

Bevorzugte Verbindungen der Formel I mit $R^4$ = CN können sein:

$[(C_{11}H_{23}O-(CH_2-CH_2O)_2](EtO)_2Si(CH_2)_3SCN$,
$[(C_{11}H_{23}O-(CH_2-CH_2O)_3](EtO)_2Si(CH_2)_3SCN$,

$[(C_{11}H_{23}O-(CH_2-CH_2O)_4](EtO)_2Si(CH_2)_3SCN$,
$[(C_{11}H_{23}O-(CH_2-CH_2O)_5](EtO)_2Si(CH_2)_3SCN$,
$[(C_{11}H_{23}O-(CH_2-CH_2O)_6](EtO)_2Si(CH_2)_3SCN$,

$[(C_{12}H_{25}O-(CH_2-CH_2O)_2](EtO)_2Si(CH_2)_3SCN$,
$[(C_{12}H_{25}O-(CH_2-CH_2O)_3](EtO)_2Si(CH_2)_3SCN$,
$[(C_{12}H_{25}O-(CH_2-CH_2O)_4](EtO)_2Si(CH_2)_3SCN$,
$[(C_{12}H_{25}O-(CH_2-CH_2O)_5](EtO)_2Si(CH_2)_3SCN$,
$[(C_{12}H_{25}O-(CH_2-CH_2O)_6](EtO)_2Si(CH_2)_3SCN$,

$[(C_{13}H_{27}(CH_2-CH_2O)_2](EtO)_2Si(CH_2)_3SCN$,
$[(C_{13}H_{27}O-(CH_2-CH_2O)_3](EtO)_2Si(CH_2)_3SCN$,
$[(C_{13}H_{27}O-(CH_2-CH_2O)_4](EtO)_2Si(CH_2)_3SCN$,
$[(C_{13}H_{27}O-(CH_2-CH_2O)_5](EtO)_2Si(CH_2)_3SCN$,
$[(C_{13}H_{27}O-(CH_2-CH_2O)_6](EtO)_2Si(CH_2)_3SCN$,

$[(C_{14}H_{29}O-(CH_2-CH_2O)_2](EtO)_2Si(CH_2)_3SCN$,
$[(C_{14}H_{29}O-(CH_2-CH_2O)_3](EtO)_2Si(CH_2)_3SCN$,
$[(C_{14}H_{29}O-(CH_2-CH_2O)_4](EtO)_2Si(CH_2)_3SCN$,
$[(C_{14}H_{29}O-(CH_2-CH_2O)_5](EtO)_2Si(CH_2)_3SCN$,
$[(C_{14}H_{29}O-(CH_2-CH_2O)_6](EtO)_2Si(CH_2)_3SCN$,

$[(C_{11}H_{23}O-(CH_2-CH_2O)_2]_2(EtO)Si(CH_2)_3SCN$,
$[(CH_{23}O-(CH_2-CH_2O)_3]_2(EtO)Si(CH_2)_3SCN$,
$[(C_{11}H_{23}O-(CH_2-CH_2O)_4]_2(EtO)Si(CH_2)_3SCN$,
$[(C_{11}H_{23}O-(CH_2-CH_2O)_5]_2(EtO)Si(CH_2)_3SCN$,
$[(C_{11}H_{23}O-(CH_2-CH_2O)_6]_2(EtO)Si(CH_2)_3SCN$,

$[(C_{12}H_{25}O-(CH_2-CH_2O)_2]_2(EtO)Si(CH_2)_3SCN$,
$[(C_{12}H_{25}O-(CH_2-CH_2O)_3]_2(EtO)Si(CH_2)_3SCN$,
$[(C_{12}H_{25}O-(CH_2-CH_2O)_4]_2(EtO)Si(CH_2)_3SCN$,
$[(C_{12}H_{25}O-(CH_2-CH_2O)_5]_2(EtO)Si(CH_2)_3SCN$,
$[(C_{12}H_{25}O-(CH_2-CH_2O)_6]_2(EtO)Si(CH_2)_3SCN$,

$[(C_{13}H_{27}O-(CH_2-CH_2O)_2]_2(EtO)Si(CH_2)_3SCN$,
$[(C_{13}H_{27}O-(CH_2-CH_2O)_3]_2(EtO)Si(CH_2)_3SCN$,
$[(C_{13}H_{27}O-(CH_2-CH_2O)_4]_2(EtO)Si(CH_2)_3SCN$,
$[(C_{13}H_{27}O-(CH_2-CH_2O)_5]_2(EtO)Si(CH_2)_3SCN$,
$[(C_{13}H_{27}O-(CH_2-CH_2O)_6]_2(EtO)Si(CH_2)_3SCN$,

$[(C_{14}H_{29}O-(CH_2-CH_2O)_2]_2(EtO)Si(CH_2)_3SCN$,
$[(C_{14}H_{29}O-(CH_2-CH_2O)_3]_2(EtO)Si(CH_2)_3SCN$,
$[(C_{14}H_{29}O-(CH_2-CH_2O)_4]_2(EtO)Si(CH_2)_3SCN$,
$[(C_{14}H_{29}O-(CH_2-CH_2O)_5]_2(EtO)Si(CH_2)_3SCN$,
$[(C_{14}H_{29}O-(CH_2-CH_2O)_6]_2(EtO)Si(CH_2)_3SCN$,

$[(C_{11}H_{23}O-(CH_2-CH_2O)_2]_3Si(CH_2)_3SCN$,
$[(C_{11}H_{23}O-(CH_2-CH_2O)_3]_3Si(CH_2)_3SCN$,
$[(C_{11}H_{23}O-(CH_2-CH_2O)_4]_3Si(CH_2)_3SCN$,
$[(C_{11}H_{23}O-(CH_2-CH_2O)_5]_3Si(CH_2)_3SCN$,
$[(C_{11}H_{23}O-(CH_2-CH_2O)_6]_3Si(CH_2)_3SCN$,

$[(C_{12}H_{25}O-(CH_2-CH_2O)_2]_3Si(CH_2)_3SCN$,
$[(C_{12}H_{25}O-(CH_2-CH_2O)_3]_3Si(CH_2)_3SCN$,
$[(C_{12}H_{25}O-(CH_2-CH_2O)_4]_3Si\ (CH_2)_3SCN$,
$[(C_{12}H_{25}O-(CH_2-CH_2O)_5]_3Si(CH_2)_3SCN$,
$[(C_{12}H_{25}O-(CH_2-CH_2O)_6]_3Si(CH_2)_3SCN$,

$[(C_{13}H_{27}O-(CH_2-CH_2O)_2]_3Si(CH_2)_3SCN$,
$[(C_{13}H_{27}O-(CH_2-CH_2O)_3]_3Si(CH_2)_3SCN$,
$[(C_{13}H_{27}O-(CH_2-CH_2O)_4]_3Si(CH_2)_3SCN$,
$[(C_{13}H_{27}O-(CH_2-CH_2O)_5]_3Si(CH_2)_3SCN$,
$[(C_{13}H_{27}O-(CH_2-CH_2O)_6]_3Si(CH_2)_3SCN$,

$[(C_{14}H_{29}O-(CH_2-CH_2O)_2]_3Si(CH_2)_3SCN$,
$[(C_{14}H_{29}O-(CH_2-CH_2O)_3]_3Si(CH_2)_3SCN$,
$[(C_{14}H_{29}O-(CH_2-CH_2O)_4]_3Si(CH_2)_3SCN$,
$[(C_{14}H_{29}O-(CH_2-CH_2O)_5]_3Si(CH_2)_3SCN$ oder
$[(C_{14}H_{29}O-(CH_2-CH_2O)_6]_3Si(CH_2)_3SCN$, wobei $R^6$ verzweigt oder unverzweigt sein kann.

$R^6$ kann bevorzugt $C_{12}$ bis $C_{17}$, ganz besonders bevorzugt $C_{12}$ bis $C_{16}$, außerordentlich bevorzugt $C_{12}$ bis $C_{14}$, unsubstituiertes oder substituiertes, verzweigtes oder unverzweigtes einbindiges Alkyl sein.

$R^6$ kann eine $-C_{11}H_{23}$, $-C_{12}H_{25}$, $-C_{13}H_{27}$, $-C_{14}H_{29}$, $-C_{15}H_{31}$, $-C_{16}H_{33}$ oder $-C_{17}H_{35}$ Alkylgruppe sein.
$R^6$ kann bevorzugt $C_{11}$ bis $C_{35}$, besonders bevorzugt $C_{11}$ bis $C_{30}$, ganz besonders bevorzugt $C_{12}$ bis $C_{30}$, außerordentlich bevorzugt $C_{13}$ bis $C_{20}$, unsubstituiertes oder substituiertes, verzweigtes oder unverzweigtes einbindiges Alkenyl sein.

$R^6$ kann bevorzugt $C_{11}$ bis $C_{14}$ und/oder $C_{16}$ bis $C_{30}$, ganz besonders bevorzugt $C_{11}$ bis $C_{14}$ und/oder $C_{16}$ bis $C_{25}$, außerordentlich bevorzugt $C_{12}$ bis $C_{14}$ und/oder $C_{16}$ bis $C_{20}$, unsubstituiertes oder substituiertes, verzweigtes oder unverzweigtes einbindiges Aralkyl sein.
$R^6$ kann als Alkenyl $C_{11}H_{21}$, $-C_{12}H_{23}$, $-C_{13}H_{25}$, $-C_{14}H_{27}$, $-C_{15}H_{29}$, $- C_{16}H_{31}$ oder $-C_{17}H_{33}$ sein.
$R^1$ kann ein alkoxyliertes Ricinusöl (z.B. CAS 61791-12-6) sein.
$R^1$ kann ein alkoxyliertes Oleylamin (z.B. CAS 26635-93-8) sein.

Die Polyethergruppe $(R^5O)_m$ kann statistische Ethylen- und Propylenoxideinheiten oder Polyetherblöcke aus Polyethylenoxid und Polypropylenoxid enthalten.

Die Polyethergruppe $(R^5-O)_m$ kann bevorzugt sein:

$(-O-CH_2-CH_2-)_a$,
$(-O-CH(CH_3)-CH_2-)_a$,
$(-O-CH_2-CH(CH_3)-)_a$,
$(-O-CH_2-CH_2-)_a(-O-CH(CH_3)-CH_2-)$,
$(-O-CH_2-CH_2-)(-O-CH(CH_3)-CH_2-)_a$,
$(-O-CH_2-CH_2-)_a(-O-CH_2-CH(CH_3)-)$,
$(-O-CH_2-CH_2-)(-O-CH_2-CH(CH_3)-)_a$,
$(-O-CH(CH_3)-CH_2-)_a(-O-CH_2-CH(CH_3)-)$,
$(-O-CH(CH_3)-CH_2-)(-O-CH_2-CH(CH_3)-)_a$,
$(-O-CH_2-CH_2-)_a(-O-CH(CH_3)-CH_2-)_b(-O-CH_2-CH(CH_3)-)_c$ oder Kombination miteinander,
wobei a, b und c voneinander unabhängig sind und
a gleich 1-50, bevorzugt 2-30, besonders bevorzugt 3-20, ganz besonders bevorzugt 4-15, außerordentlich bevorzugt 5-12,
b gleich 1-50, bevorzugt 2-30, besonders bevorzugt 3-20, ganz besonders bevorzugt 4-15, außerordentlich bevorzugt 5-12 und
c gleich 1-50, bevorzugt 2-30, besonders bevorzugt 3-20, ganz besonders bevorzugt 4-15, außerordentlich bevorzugt 5-12 ist.

Die Indexe a, b und c sind ganze Zahlen und bezeichnen die Anzahl der Wiederholeinheiten.
Die Gruppe $(R^5-O)_m$ kann für $R^4$ gleich -H, -CN oder $-C(=O)-R^9$ bevorzugt Ethylenoxid- $(CH_2-CH_2-O)_a$ oder Propylenoxid-$(CH(CH_3)-CH_2-O)_a$ bzw. $(CH_2-CH(CH_3)-O)_a$ -Einheiten enthalten.
Die Gruppe $(R^5-O)_m$ kann für $R^4$ gleich -H, -CN oder $-C(=O)-R^9$ bevorzugt Ethylenoxid- $(CH_2-CH_2-O)_a$ und Propylenoxid-$(CH(CH_3)-CH_2-O)_a$ bzw. $(CH_2-CH(CH_3)-O)_a$ -Einheiten statistisch verteilt oder in Blöcken enthalten.
Die Alkylpolyethergruppe Gruppe $(R^5-O)_m$ kann für $R^4$ gleich-H bevorzugt Ethylenoxid- $(CH_2-CH_2-O)_a$ und Propylenoxid-$(CH(CH_3)-CH_2-O)_a$ bzw. $(CH_2-CH(CH_3)-O)_a$ -Einheiten statistisch verteilt oder in Blöcken enthalten.
Die Gruppe $(R^5-O)_m$ kann für $R^4$ gleich -H bevorzugt Propylenoxid- $(CH(CH_3)-CH_2-O)_a$ bzw. $(CH_2-CH(CH_3)-O)_a$ -Einheiten enthalten.
Die Alkylpolyethergruppe $O-(R^5-O)_m-R^6$ kann für $R^4$ gleich -H, -CN oder $-C(C=O)-R^9$ sein:

$O-(CH_2-CH_2O)_2-C_{11}H_{23}$, $O-(CH_2-CH_2O)_3-C_{11}H_{23}$, $O-(CH_2-CH_2O)_4-C_{11}H_{23}$, $O-(CH_2-CH_2O)_5-C_{11}H_{23}$, $O-(CH_2-CH_2O)_6-C_{11}H_{23}$, $O-(CH_2-CH_2O)_7-C_{11}H_{23}$,

$O-(CH(CH_3)-CH_2O)_2-C_{11}H_{23}$, $O-(CH(CH_3)-CH_2O)_3-C_{11}H_{23}$, $O-(CH(CH_3)-CH_2O)_4-C_{11}H_{23}$, $O-(CH(CH_3)-CH_2O)_5-C_{11}H_{23}$, $O-(CH(CH_3)-CH_2O)_6-C_{11}H_{23}$, $O-(CH(CH_3)-CH_2O)-_7-C_{11}H_{23}$,

$O-(CH_2-CH_2O)_2-C_{12}H_{25}$, $O-(CH_2-CH_2O)_3-C_{12}H_{25}$, $O-(CH_2-CH_2O)_4-C_{12}H_{25}$, $O-(CH_2-CH_2O)_5-C_{12}H_{25}$, $O-(CH_2-CH_2O)_6-C_{12}H_{25}$, $O-(CH_2-CH_2O)_7-C_{12}H_{25}$,

$O-(CH(CH_3)-CH_2O)_2-C_{12}H_{25}$, $O-(CH(CH_3)-CH_2O)_3-C_{12}H_{25}$, $O-(CH(CH_3)-CH_2O)_4-C_{12}H_{25}$, $O-(CH(CH_3)-CH_2O)_5-C_{12}H_{25}$, $O-(CH(CH_3)-CH_2O)_6-C_{12}H_{25}$, $O-(CH(CH_3)-CH_2O)_7-C_{12}H_{25}$,

$O-(CH_2-CH_2O)_2-C_{13}H_{27}$, $O-(CH_2-CH_2O)_3-C_{13}H_{27}$, $O-(CH_2-CH_2O)_4-C_{13}H_{27}$, $O-(CH_2-CH_2O)_5-C_{13}H_{27}$, $O-(CH_2-CH_2O)_6-C_{13}H_{27}$, $O-(CH_2-CH_2O)_7-C_{13}H_{27}$,

$O-(CH(CH_3)-CH_2O)_2-C_{13}H_{27}$, $O-(CH(CH_3)-CH_2O)_3-C_{13}H_{27}$, $O-(CH(CH_3)-CH_2O)_4-C_{13}H_{27}$, $O-(CH(CH_3)-CH_2O)_5-C_{13}H_{27}$, $O-(CH(CH_3)-CH_2O)_6-C_{13}H_{27}$, $O-(CH(CH_3)-CH_2O)_7-C_{13}H_{27}$,

$O-(CH_2-CH_2O)_2-C_{14}H_{29}$, $O-(CH_2-CH_2O)_3-C_{14}H_{29}$, $O-(CH_2-CH_2O)_4-C_{14}H_{29}$, $O-(CH_2-CH_2O)_5-C_{14}H_{29}$, $O-(CH_2-CH_2O)_6-C_{14}H_{29}$, $O-(CH_2-CH_2O)_7-C_{14}H_{29}$,

$O-(CH(CH_3)-CH_2O)_2-C_{14}H_{29}$, $O-(CH(CH_3)-CH_2O)_3-C_{14}H_{29}$, $O-(CH(CH_3)-CH_2O)_4-C_{14}H_{29}$, $O-(CH(CH_3)-CH_2O)_5-C_{14}H_{29}$, $O-(CH(CH_3)-CH_2O)_6-C_{14}H_{29}$, $O-(CH(CH_3)-CH_2O)_7-C_{14}H_{29}$,

$O-(CH_2-CH_2O)_2-C_{15}H_{31}$, $O-(CH_2-CH_2O)_3-C_{15}H_{31}$, $O-(CH_2-CH_2O)_4-C_{15}H_{31}$, $O-(CH_2-CH_2O)_5-C_{15}H_{31}$, $O-(CH_2-CH_2O)_6-C_{15}H_{31}$, $O-(CH_2-CH_2O)-_7-C_{15}H_{31}$,

$O-(CH(CH_3)-CH_2O)_2-C_{15}H_{31}$, $O-(CH(CH_3)-CH_2O)_3-C_{15}H_{31}$, $O-(CH(CH_3)-CH_2O)_4-C_{15}H_{31}$, $O-(CH(CH_3)-CH_2O)_5-C_{15}H_{31}$, $O-(CH(CH_3)-CH_2O)_6-C_{15}H_{31}$, $O-(CH(CH_3)-CH_2O)-_7-C_{15}H_{31}$,

$O-(CH_2-CH_2O)_2-C_{16}H_{33}$, $O-(CH_2-CH_2O)_3-C_{16}H_{33}$, $O-(CH_2-CH_2O)_4-C,_6H_{33}$, $O-(CH_2-CH_2O)_5-C_{16}H_{33}$, $O-(CH_2-CH_2O)_6-C_{16}H_{33}$, $O-(CH_2-CH_2O)_7-C_{16}H_{33}$,

$O-(CH(CH_3)-CH_2O)_2-C_{16}H_{33}$, $O-(CH(CH_3)-CH_2O)_3-C_{16}H_{33}$, $O-(CH(CH_3)-CH_2O)_4-C_{16}H_{33}$, $O-(CH(CH_3)-CH_2O)_5-C_{16}H_{33}$, $O-(CH(CH_3)-CH_2O)_6-C_{16}H_{33}$, $O-(CH(CH_3)-CH_2O)_7-C_{16}H_{33}$,

$O-(CH_2-CH_2O)_2-C_{17}H_{35}$, $O-(CH_2-CH_2O)_3-C_{17}H_{35}$, $O-(CH_2-CH_2O)_4-C_{17}H_{35}$, $O-(CH_2-CH_2O)_5-C_{17}H_{35}$, $O-(CH_2-CH_2O)_6-C_{17}H_{35}$, $O-(CH_2-CH_2O)_7-C_{17}H_{35}$,

$O-(CH(CH_3)-CH_2O)_2-C_{17}H_{35}$, $O-(CH(CH_3)-CH_2O)_3-C_{17}H_{35}$, $O-(CH(CH_3)-CH_2O)_4-C_{17}H_{35}$, $O-(CH(CH_3)-CH_2O)_5-C_{17}H_{35}$, $O-(CH(CH_3)-CH_2O)_6-C_{17}H_{35}$ oder $O-(CH(CH_3)-CH_2O)_7-C_{17}H_{35}$.

Die Gruppe $R^5$ kann substituiert sein. Die Gruppe $R^6$ kann $C_{13}H_{27}$ sein.
$R^1$ kann $-O-(C_2H_4-O)_5-C_{11}H_{23}$, $-O-(C_2H_4-O)_5-C_{12}H_{25}$, $-O-(C_2H_4-O)_5-C_{13}H_{27}$, $-O-(C_2H_4-O)_5-C_{14}H_{29}$, $-O-(C_2H_4-O)_5-C_{15}H_{31}$, $-O-(C_2H_4-O)_3-C_{13}H_{27}$, $-O-(C_2H_4-O)_4-C_{13}H_{27}$, $-O-(C_2H_4-O)_6-C_{13}H_{27}$, $-O-(C_2H_4-O)_7-C_{13}H_{27}$, $-O-(CH_2CH_2-O)_5-(CH_2)_{10}CH_3$, $-O-(CH_2CH_2-O)_5-(CH_2)_{11}CH_3$, $-O-(CH_2CH_2-O)_5-(CH_2)_{12}CH_3$, $-O-(CH_2CH_2-O)_5-(CH_2)_{13}CH_3$, $-O-(CH_2CH_2-O)_5-(CH_2)_{14}CH_3$, $-O-(CH_2CH_2-O)_3-(CH_2)_{12}CH_3$, $-O-(CH_2CH_2-O)_4-(CH_2)_{12}CH_3$, $-O-(CH_2CH_2-O)_6-(CH_2)_{12}CH_3$, $-O-(CH_2CH_2-O)_7-(CH_2)_{12}CH_3$,

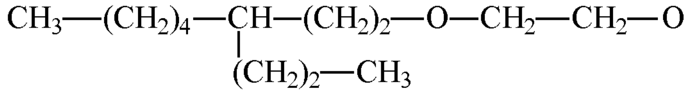

,

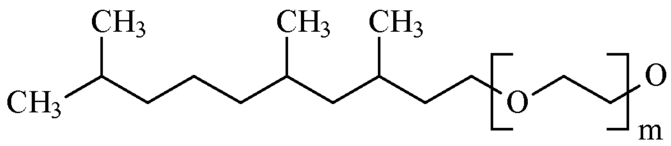

,

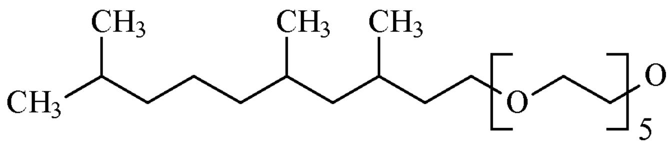

,

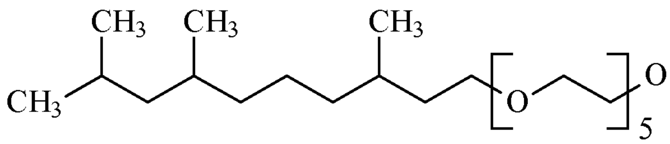

oder

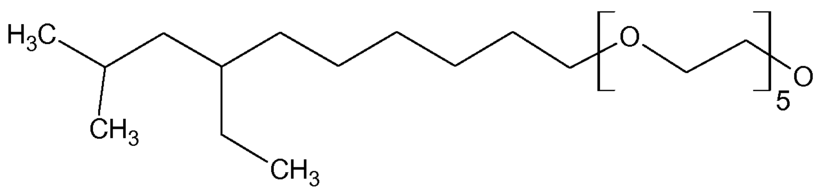

sein.

Die mittlere Verzweigungszahl der Kohlenstoffkette $R^6$ kann 1 bis 5, vorzugsweise 1,2 bis 4, sein. Die mittlere Verzweigungszahl ist dabei definiert als die Anzahl der $CH_3$-Gruppen-1.

$R^3$ kann $CH_2$, $CH_2CH_2$, $CH_2CH_2CH_2$, $CH_2CH_2CH_2CH_2$, $CH(CH_3)$, $CH_2CH(CH_3)$, $CH(CH_3)CH_2$, $C(CH_3)_2$, $CH(C_2H_5)$, $CH_2CH_2CH(CH_3)$, $CH_2CH(CH_3)CH_2$
oder

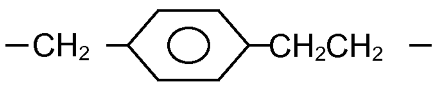

bedeuten.

Die Mercaptosilan-Polymer-Abmischung kann ein Gemisch aus unterschiedlichen Mercaptosilanen der allgemeinen Formel I und gegebenenfalls deren Kondensationsprodukten enthalten.

Das Gemisch aus unterschiedlichen Mercaptosilanen der allgemeinen Formel I kann Mercaptosilane der allgemeinen Formel I mit verschiedenen m-Werten enthalten.

Das Gemisch aus unterschiedlichen Mercaptosilanen der allgemeinen Formel I kann Mercaptosilane der allgemeinen Formel I mit verschiedenen $R^6$-Gruppen enthalten. Die R6-Gruppen können dabei unterschiedliche C-Atomkettenlängen aufweisen.

Das Gemisch aus unterschiedlichen Mercaptosilanen der allgemeinen Formel I kann unterschiedliche Mercaptosilane der allgemeinen Formel I mit verschiedenen $R^1$ und $R^2$ Gruppen, wobei die $R^1$ und $R^2$ Gruppen aus Alkoxy und Alkylpolyethergruppen bestehen, enthalten.

Das Gemisch aus unterschiedlichen Mercaptosilanen der allgemeinen Formel I kann unterschiedliche Mercaptosilane der allgemeinen Formel I mit unterschiedlichem $R^2$ enthalten.

Das Gemisch aus unterschiedlichen Mercaptosilanen der allgemeinen Formel I kann unterschiedliche Mercaptosilane der allgemeinen Formel I mit verschiedenen $R^1$ und $R^2$ Gruppen, wobei die $R^1$ Gruppen aus Alkylpolyethergruppen und die $R^2$ Gruppen aus Ethoxygruppen bestehen und $R^6$ eine Alkylkettenlänge von 13 C-Atomen, $R^5$ Ethylen und m im

Mittel 5 ist, enthalten.

Das Gemisch aus unterschiedlichen Mercaptosilanen der allgemeinen Formel I kann unterschiedliche Mercaptosilane der allgemeinen Formel I enthalten, wobei $R^2$ gleich oder verschieden und eine Ethoxy- oder Alkylpolyethergruppe ($R^1$) ist, $R^6$ eine Alkylkettenlänge von 13 C-Atomen, $R^5$ gleich Ethylen und m im Mittel 5 ist, und $R^2$ unterschiedlich ist.

Das Gemisch aus unterschiedlichen Mercaptosilanen der allgemeinen Formel I kann unterschiedliche Mercaptosilane der allgemeinen Formel I enthalten, wobei $R^1$ und $R^2$ Alkoxy und Alkylpolyethergruppen sind und $R^6$ aus unterschiedlichen C-Atomkettenlängen besteht.

Das Gemisch aus unterschiedlichen Mercaptosilanen der allgemeinen Formel I kann unterschiedliche Mercaptosilane der allgemeinen Formel I enthalten, wobei $R^2$ gleich oder verschieden und eine Alkoxy- oder Alkylpolyethergruppe ($R^1$) ist, und $R^2$ in dem Gemisch unterschiedlich ist, $R^6$ aus unterschiedlichen C-Atomkettenlängen besteht.

Das Gemisch aus unterschiedlichen Mercaptosilanen der allgemeinen Formel I kann bevorzugt

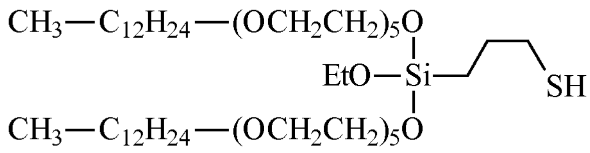

und/oder

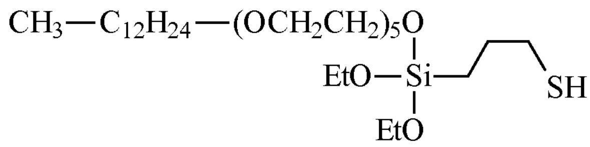

und gegebenenfalls Hydrolyse- und/oder Kondensationsprodukte der vorgenannten Verbindungen enthalten.

Aus den Mercaptosilanen der Formel I können durch Wasserzugabe und ggf. Additivzugabe leicht Kondensationsprodukte, das heisst Oligo- und Polysiloxane gebildet werden.

Diese oligomeren oder polymeren Siloxane der Verbindungen der Formel I können als Kopplungsreagenzien für dieselben Anwendungen wie die monomeren Verbindungen der Formel I verwendet werden.

Die Mercaptosilanverbindungen können auch als Mischung der oligomeren oder polymeren Siloxane von Mercaptosilanen der allgemeinen Formel I oder als Mischungen von Mercaptosilanen der allgemeinen Formel I mit Mischungen der oligomeren oder polymeren Siloxane von Mercaptosilanen der allgemeinen Formel I vorliegen.

Ein weiterer Gegenstand der Erfindung ist ein Verfahren zur Herstellung der erfindungsgemäßen Mercaptosilan-Polymer-Abmischung, welches dadurch gekennzeichnet ist, dass man mindestens ein Mercaptosilane der allgemeinen Formel I mit mindestens einem Polymer, ausgewählt aus der Gruppe Polypropylen, Polyethylen oder Mischungen der vorgenannten Polymeren, mischt.

Das erfindungsgemäße Verfahren kann kontinuierlich oder diskontinuierlich durchgeführt werden.

Das Gewichtsverhältnis von Mercaptosilan der allgemeinen Formel I zu Polymer kann 30:70 bis 60:40, vorzugsweise 40:60 bis 50:50, betragen.

Das erfindungsgemäße Verfahren kann man bei Temperaturen zwischen 5 und 150°C, vorzugsweise zwischen 10 und 100°C, besonders bevorzugt zwischen 15 und 60°C, durchführen. Zur Vermeidung von Kondensationsreaktionen kann es vorteilhaft sein, die Reaktion in einer wasserfreien Umgebung, idealerweise in einer Inertgasatmosphäre, durchzuführen.

Das erfindungsgemäße Verfahren kann man bei Normaldruck oder reduziertem Druck durchführen.

Das Mischen in dem erfindungsgemäßen Verfahren kann durch mechanische Mischer erfolgen. Mit den mechanischen Mischern kann einerseits eine gleichmäßige Produktbewegung und - durchmischung erreicht und andererseits keine übermäßige Zerstörung des Trägergranulats bewirkt werden.

Eine gängige Kenngröße zur Klassifizierung von Feststoffmischern stellt hierbei die Froude-Zahl (Fr) dar, die das Verhältnis von Zentrifugalbeschleunigung zu Erdbeschleunigung angibt.

Neben langsam laufenden Mischern mit Fr < 1, wie z.B. Freifall- oder Schubmischer können auch schnell laufende Mischer mit Fr > 1, wie z.B. Wurfmischer, aber auch Fliehkraftmischer mit Fr >> 1 eingesetzt werden.

Im Falle eines langsam laufenden Schubmischers können z.B. Trommelmischer (beispielsweise der Firma Engelsmann) oder Doppelwellenmischer (beispielsweise der Firma Gericke oder Firma Forberg) eingesetzt werden. Als schnell laufende Mischer für den Bereich Fr > 1 können z.B. Pflugscharmischer (beispielsweise der Firma Lödige) oder Vertikal-Zweiwellenmischer (beispielsweise der Firma Amixon) eingesetzt werden. Im Bereich Fr >> 1 können Fliehkraft- oder Intensivmischer (beispielsweise der Firma Eirich oder der Firma Mixaco) eingesetzt werden.

Besonders bevorzugt können für das erfindungsgemäße Verfahren Pflugscharmischer eingesetzt werden.

Die erfindungsgemäße Mercaptosilan-Polymer-Abmischung kann als Haftvermittler zwischen anorganischen Materialien, zum Beispiel Glasfasern, Metallen, oxidischen Füllstoffen, Kieselsäuren, und organischen Polymeren, zum Beispiel Duroplasten, Thermoplasten oder Elastomeren beziehungsweise als Vernetzungsmittel und Oberflächenmodifizierungsmittel verwendet werden. Die erfindungsgemäße Mercaptosilan-Polymer-Abmischung kann als Kopplungsreagenz in Kautschukmischungen, beispielsweise Reifenlaufflächen, verwendet werden.

Ein weiterer Gegenstand der Erfindung ist eine Kautschukmischung, enthaltend

(A) mindestens einen Kautschuk,
(B) mindestens einen Füllstoff, vorzugsweise gefällte Kieselsäure, und
(C) mindestens eine erfindungsgemäße Mercaptosilan-Polymer-Abmischung.

Als Kautschuk können Naturkautschuk und/oder Synthesekautschuke verwendet werden. Bevorzugte Synthesekautschuke sind beispielsweise bei W. Hofmann, Kautschuktechnologie, Genter Verlag, Stuttgart 1980, beschrieben. Sie können unter anderem

- Polybutadien (BR),
- Polyisopren (IR),
- Styrol/Butadien-Copolymerisate, beispielsweise Emulsions-SBR (E-SBR) oder Lösungs-SBR (L-SBR), vorzugsweise mit Styrolgehalten von 1 bis 60 Gew.-%, besonders vorzugsweise 5 bis 50 Gew.-% (SBR),
- Chloropren (CR)
- Isobutylen/Isopren-Copolymerisate (IIR),
- Butadien/Acrylnitril-Copolymere mit Acrylnitrilgehalten von 5 bis 60, vorzugsweise 10 bis 50 Gew.-% (NBR),
- teilhydrierter oder vollständig hydrierter NBR-Kautschuk (HNBR)
- Ethylen/Propylen/Dien-Copolymerisate (EPDM)
- oben genannte Kautschuke, die zusätzlich funktionelle Gruppen besitzen, wie z.B. Carboxy- , Silanol- oder Epoxygruppen, beispielsweise Epoxidierter NR, Carboxyfunktionalisierter NBR oder Silanol- (-SiOH) bzw. Siloxy-funktionalisierter (-Si-OR) SBR,

sowie Mischungen dieser Kautschuke sein.

In einer bevorzugten Ausführungsform können die Kautschuke schwefelvulkanisierbar sein. Für die Herstellung von PKW-Reifenlaufflächen können insbesondere anionisch polymerisierte L-SBR-Kautschuke (Lösungs-SBR) mit einer Glastemperatur oberhalb von -50 °C sowie deren Mischungen mit Dienkautschuken eingesetzt werden. Besonders bevorzugt können L-SBR-Kautschuke, deren Butadienteil einen Vinylanteil von über 20 Gew.-% aufweisen, eingesetzt werden. Ganz besonders bevorzugt können L-SBR-Kautschuke, deren Butadienteil einen Vinylanteil von über 50 Gew.-% aufweisen, eingesetzt werden.

Bevorzugt können Mischungen der oben genannten Kautschuke, die einen L-SBR-Anteil von über 50 Gew.-%, besonders bevorzugt über 60 Gew.-%, aufweisen, eingesetzt werden.

Als Füllstoffe können für die erfindungsgemäße Kautschukmischung die folgenden Füllstoffe eingesetzt werden:

- Ruße: Die hierbei zu verwendenden Ruße sind nach dem Flammruß-, Furnace-, Gasruß oder Thermal-Verfahren hergestellt und besitzen BET-Oberflächen von 20 bis 200 $m^2/g$. Die Ruße können gegebenenfalls auch Heteroatome wie zum Beispiel Si enthalten.
- Amorphe Kieselsäuren, hergestellt zum Beispiel durch Fällung von Lösungen von Silikaten oder Flammenhydrolyse von Siliciumhalogeniden mit spezifischen Oberflächen von 5 bis 1000 $m^2/g$, vorzugsweise 20 bis 400 $m^2/g$ (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden vorliegen.
- Synthetische Silikate, wie Aluminiumsilikat, Erdalkalisilikate, wie Magnesiumsilikat oder Calciumsilikat, mit BET-Oberflächen von 20 bis 400 $m^2$/g und Primärteilchendurchmessern von 10 bis 400 nm.

- Synthetische oder natürliche Aluminium-oxide und - hydroxide
- Natürliche Silikate, wie Kaolin und andere natürlich vorkommende Kieselsäuren.
- Glasfaser und Glasfaserprodukte (Matten, Stränge) oder Mikroglaskugeln.

Bevorzugt können amorphe Kieselsäuren, hergestellt durch Fällung von Lösungen von Silikaten, mit BET-Oberflächen von 20 bis 400 $m^2$/g, besonders bevorzugt 100 $m^2$/g bis 250 $m^2$/g, in Mengen von 5 bis 150 Gew.-Teilen, jeweils bezogen auf 100 Teile Kautschuk, eingesetzt werden.
Die genannten Füllstoffe können alleine oder im Gemisch eingesetzt werden.
Die Kautschukmischung kann 5 bis 150 Gew.-Teile Füllstoff (B) und 0,1 bis 35 Gew.-Teile, bevorzugt 2 bis 20 Gew.-Teile, besonders bevorzugt 5 bis 15 Gew.-Teile, erfindungsgemäße Mercaptosilan-Polymer-Abmischung (C), enthalten, wobei die Gew.-Teile auf 100 Gew.-Teile Kautschuk bezogen sind.
Die Kautschukmischung kann zusätzlich Silikonöl und/oder Alkylsilan enthalten.
Die erfindungsgemäße Kautschukmischung kann weitere bekannte Kautschukhilfsmittel, wie zum Beispiel Vernetzer, Vulkisationsbeschleuniger, Reaktionsbeschleuniger, - verzögerer, Alterungsschutzmittel, Stabilisatoren, Verarbeitungshilfsmittel, Weichmacher, Wachse oder Metalloxide enthalten, sowie ggf. Aktivatoren, wie Triethanolamin, Polyethylenglykol oder Hexantriol.

Die Kautschukhilfsmittel können in üblichen Mengen, die sich unter anderem nach dem Verwendungszweck richten, eingesetzt werden. Übliche Mengen können zum Beispiel Mengen von 0,1 bis 50 Gew.-%, bezogen auf Kautschuk, sein.
Als Vernetzer können Schwefel oder organische Schwefelspender eingesetzt werden.
Die erfindungsgemäße Kautschukmischung kann weitere Vulkanisationsbeschleuniger enthalten. Beispielsweise können als geeignete Vulkanisationsbeschleuniger Mercaptobenzthiazole, Sulfenamide, Guanidine, Dithiocarbamate, Thioharnstoffe, Thiocarbonate sowie deren Zinksalze, wie z.B. Zinkdibutyldithiocarbamat, eingesetzt werden.
Die erfindungsgemäße Kautschukmischung kann bevorzugt zusätzlich

(D) ein Thiuramsulfid- und/oder Carbamatbeschleuniger und/oder die entsprechenden Zinksalze,
(E) ein stickstoffhaltigen Co-Aktivator,
(F) gegebenenfalls weitere Kautschukhilfsmittel und
(G) gegebenenfalls weitere Beschleuniger enthalten, wobei das Gewichtsverhältnis Beschleuniger (D) zu stickstoffhaltigem Co-Aktivator (E) gleich oder größer 1 ist.

Die erfindungsgemäße Kautschukmischung kann (D) Tetrabenzylthiuramdisulfid oder Tetramethylthiuramdisulfid mit mindestens 0,25 Gewichtsteilen, bezogen auf 100 Gewichtsteile Kautschuk, (E) Diphenylguanidin mit maximal 0,25 Gewichtsteile, bezogen auf 100 Gewichtsteile Kautschuk, und (G) Cyclohexyl- oder Dicyclohexylsulfenamid mit mehr Gewichtsteilen als (D) enthalten.
Bevorzugt können Sulfenamide zusammen mit Guanidinen und Thiuramen, besonders bevorzugt Cyclohexylsulfenamid oder Dicylohexylsulfenamid zusammen mit Diphenylguanidin und Tetrabenzylthiuramdisulfid oder Tetramethylthiuramdisulfid, eingesetzt werden.
Die Vulkanisationsbeschleuniger und Schwefel können in Mengen von 0,1 bis 10 Gew.-%, bevorzugt 0,1 bis 5 Gew.-%, bezogen auf den eingesetzten Kautschuk, eingesetzt werden. Besonders bevorzugt können Schwefel und Sulfenamide in Mengen von 1 bis 4 Gew.-%, Thiurame in Mengen von 0,2 bis 1 Gew.-% und Guanidine in Mengen von 0 Gew.-% bis 0,5 Gew.-% eingesetzt werden.
Ein weiterer Gegenstand der Erfindung ist ein Verfahren zur Herstellung der erfindungsgemäßen Kautschukmischung, welches dadurch gekennzeichnet ist, dass man mindestens einen Kautschuk (A), mindestens einen Füllstoff (B), mindestens eine erfindungsgemäße Mercaptosilan-Polymer-Abmischung (C) und gegebenenfalls weitere Kautschukhilfsmittel in einem Mischaggregat mischt.
Die Abmischung der Kautschuke mit dem Füllstoff, gegebenenfalls Kautschukhilfsmitteln und der erfindungsgemäßen Mercaptosilane-Polymer-Abmischung kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der Füllstoff, die erfindungsgemäße Mercaptosilane-Polymer-Abmischung und die Kautschukhilfsmittel bei 100 bis 170°C eingemischt werden.
Dabei können sich die Zugabereihenfolge und der Zugabezeitpunkt der Einzelkomponenten entscheidend auf die erhaltenen Mischungseigenschaften auswirken. Üblicherweise kann die so erhaltene Kautschukmischung in einem Innenmischer oder auf einer Walze bei 40 bis 110 °C mit den Vernetzungschemikalien versetzt werden und zur sogenannten Rohmischung für die nachfolgenden Prozeßschritte, wie zum Beispiel Formgebung und Vulkanisation, verarbeitet werden.
Die Vulkanisation der erfindungsgemäßen Kautschukmischung kann bei Temperaturen von 80 bis 200 °C, bevorzugt 130 bis 180°C, gegebenenfalls unter Druck von 10 bis 200 bar erfolgen.
Die erfindungsgemäße Kautschukmischung kann zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungselementen, wie zum Beispiel Dichtungsringe und Dämpfungselemente, verwendet werden.
Ein weiterer Gegenstand der Erfindung sind Formkörper, erhältlich aus der erfindungsgemäßen Kautschukmischung durch Vulkanisation.

Die erfindungsgemäßen Mercaptosilan-Polymer-Abmischungen haben den Vorteil, dass auch bei längerer Lagerzeit sich das Mercaptosilan nicht verändert.
Ein weiterer Vorteil ist die gute Verarbeitbarkeit, ein gutes Verstärkungsverhalten, eine gute dynamische Steifigkeit und Dispergierbarkeit.

**Beispiele:**

**Beispiel 1:**

Das Polymer wird bei 26 °C und 80 mbar im Vakuumtrockenschrank für 8 Stunden getrocknet. Anschließend wird das Polymer direkt in einen mechanischen Mischer Somakon MP-L (Firma Somakon Verfahrenstechnik UG) eingewogen und bei eine Drehzahl von 250 UpM und Raumtemperatur gemischt (Tabelle 1), damit das Gut an der äußeren Wand auftreibt. Der Abstreifer wird auf eine konstante Drehzahl von 30 U/min eingestellt. Auf die Granulate wird das entsprechende Silan mit einer Taumelkolbenpumpe über eine 1,5 mm Düse aufgetropft. Die Dosiergeschwindigkeit liegt dabei zwischen 7 und 7,5 g/min. Das so erhaltene Produkt wird über Nacht bei Raumtemperatur unter Vakuum (50 mbar) nachbehandelt.

Tabelle 1

| | Abmischung 1 Vergleichs-bsp. | Abmischung 2 Vergleichs-Bsp. | Abmischung 3 Erfindungs -gemäßes Bsp. | Abmischung 4 Erfindungs gemäßes Bsp. |
|---|---|---|---|---|
| Silan | Si 363 | Si 363 | Si 363 | Si 363 |
| Silanmenge | 158 g | 105 g | 158 g | 210 g |
| Polymer | XP-712 (Polyamid-12) | XP 500 (EVA) | MP-100 (PP) | XP-200 (HDPE) |
| Polymermenge | 105 g | 160 g | 104 g | 140 g |
| Mischerdrehzahl | 250 UpM | 250 UpM | 250 UpM | 250 UpM |

Accurel XP-712 ist ein Polyamid-12 der Firma Membrana GmbH.
Accurel XP-500 ist ein Ethylenvinylacetat der Firma Membrana GmbH.
Accurel MP-100 ist Polypropylen der Firma Membrana GmbH.
Accurel XP-200 ist HDPE der Firma Membrana GmbH.
Si 363 ist ein Organosilan der Formel $(C_{13}H_{27}(OCH_2CH_2)_5\text{-}O\text{-})_2(C_2H_5O)Si(CH_2)_3\text{-}SH$ der Firma Evonik Industries AG.

**Beispiel 2**

Die für die Kautschukmischungen verwendete Rezeptur ist in der folgenden Tabelle 2 angegeben. Dabei bedeutet die Einheit phr Gewichtsanteile bezogen auf 100 Teile des eingesetzten Rohkautschuks. Die Mercaptosilan-Polymer-Abmischungen werden, bezogen auf das Mercaptosilan isomolar eingesetzt. Die Mischungen werden in einem 1,5 l Mischer (E-Typ) bei einer Batch-Temperatur von 155°C hergestellt.

Tabelle 2

| Substanz<br>1. Stufe | Menge [phr]<br>Referenzkautschukmischung I "in situ" | Menge [phr]<br>Referenzkautschukmischung II, enthaltend Abmischung 1 | Menge [phr]<br>Referenzkaut schukmischung III, enthaltend Ab-mischung 2 | Menge [phr]<br>Erf.Kautschukmischung II, enthaltend erf.Ab-mischung 3 | Menge [phr]<br>Erf.Kautschukmischung III, enthaltend erf.Ab-mischung 4 |
|---|---|---|---|---|---|
| Buna VSL 5025-2 | 96 | 96 | 96 | 96 | 96 |
| Buna CB 24 | 30 | 30 | 30 | 30 | 30 |
| Ultrasil 7000 GR | 90 | 90 | 90 | 90 | 90 |
| ZnO RS | 2 | 2 | 2 | 2 | 2 |
| Edenor ST1 | 1 | 1 | 1 | 1 | 1 |
| Vivatec 500 | 8,75 | 8,75 | 8,75 | 8,75 | 8,75 |
| Rhenogran DPG-80 | 2 | 2 | 2 | 2 | 2 |
| Protector G 3108 | 2 | 2 | 2 | 2 | 2 |
| Vulkanox 4020/LG | 2 | 2 | 2 | 2 | 2 |
| Vulkanox HS/LG | 1,5 | 1,5 | 1,5 | 1,5 | 1,5 |
| Aktiplast ST | 3,5 | 3,5 | 3,5 | 3,5 | 3,5 |
| Si 363 | 10 | - | - | - | - |
| Abmischung 1 | - | 30 | - | - | - |
| Abmischung 2 | - | - | 30 | - | - |
| Abmischung 3 | - | - | - | 30 | - |
| Abmischung 4 | - | - | - | - | 30 |
| 2. Stufe | | | | | |
| Batch Stufe 1 | | | | | |
| 3. Stufe | | | | | |
| Batch Stufe 2 | | | | | |

(fortgesetzt)

| Substanz | Menge [phr] | Menge [phr] | Menge [phr] | Menge [phr] | Menge [phr] |
|---|---|---|---|---|---|
| Perkacit TBzTD | 0,2 | 0,2 | 0,2 | 0,2 | 0,2 |
| Vulkacit CZ/EG-C | 1,5 | 1,5 | 1,5 | 1,5 | 1,5 |
| Schwefel | 1,5 | 1,5 | 1,5 | 1,5 | 1,5 |

Bei dem Polymer VSL 5025-2 handelt es sich um ein in Lösung polymerisiertes SBR-Copolymer der Bayer AG, mit einem Styrolgehalt von 25 Gew.-% und einem Vinylanteil von 50 Gew.-%. Das Copolymer enthält 37,5 phr TDAE-Öl und weist eine Mooney-Viskosität (ML 1+4/100°C) von 47 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5.

Ultrasil 7000 GR ist eine leicht dispergierbare Kieselsäure der Evonik Industries AG und besitzt eine BET-Oberfläche von 170 $m^2$/g.

Als TDAE Öl wird Vivatec 500 der Firma Klaus Dahleke KG verwendet, bei Vulkanox 4020 handelt es sich um 6PPD der Firma Lanxess Europe GmbH & Co. KG, bei Vulkanox HS/LG um TMQ der Firma Lanxess und Protektor G3108 ist ein Ozonschutzwachs der Firma Paramelt B.V., bei ZnO RS handelt es sich um ZnO der Firma Arnsperger Chemikalien GmbH, bei EDENOR ST1 GS 2.0 handelt es sich um Palmitin-Stearinsäure der Firma Caldic Deutschland GmbH & Co. KG, bei Aktiplast ST handelt es sich um einen Plastiziser der Firma RheinChemie, der aus einem Blend aus Hydrocarbons, Zn-Seifen und Füllstoffen besteht. Rhenogran DGG-80 besteht aus 80% DPG auf einem EVA/EPDM Träger der Firma RheinChemie und Vulkacit CZ ist CBS von der Firma Lanxess Europe GmbH & Co. KG. Perkacit TBzTD (Tetrabenzylthiuramdisulfid) ist ein Produkt der Firma Flexsys N.V..

Die Kautschukmischung wird dreistufig in einem Innenmischer gemäß Tabelle 3 hergestellt.

**Tabelle 3:**

| | **Stufe 1** |
|---|---|
| **Einstellungen** | |
| Mischaggregat<br>Drehzahl<br>Stempeldruck<br>Durchflußtemp. | Werner & Pfleiderer GK 1,5E<br>80 $min^{-1}$<br>5,5 bar<br>80 °C |
| **Mischvorgang** | |
| 0 bis 0,5 min<br>0,5 min<br>0,5 bis 1 min<br>1 bis 2 min<br>2 min<br>2 bis 3 min<br>3 min<br>3 bis 4 min | Buna VSL 5025-1 + Buna CB 24<br>TMQ, 6PPD<br>mischen<br>½ Ultrasil 7000 GR, Silan bzw. Silan-Polymer-Abmischung, ZnO<br>Säubern und lüften<br>½ Ultrasil 7000 GR, Protector G3108, Stearinsäure, Vivatec 500, DPG, Plastiziser<br>Säubern und lüften<br>mischen und ausfahren bei 150°-160°C |
| | |
| | **Stufe 2** |
| **Einstellungen** | |
| Mischaggregat<br>Drehzahl | wie in Stufe 1 bis auf:<br>90 $min^{-1}$ |
| **Mischvorgang** | |
| 0 bis 1 min<br>1 bis 3 min<br>3 min | Batch Stufe 1 aufbrechen<br>Mischen bei 155°C<br>ausfahren |
| | **Stufe 3** |
| **Einstellungen** | |
| Mischaggregat<br>Drehzahl<br>Durchflußtemp. | wie in Stufe 1 bis auf<br>40 $min^{-1}$<br>50 °C |
| **Mischvorgang** | |
| 0 bis 0,5 min | Batch Stufe 2 |

(fortgesetzt)

| Mischvorgang | |
|---|---|
| 0,5 bis 2 min | Beschleuniger und Schwefel |
| 2 min | ausfahren und auf Labormischwalzwerk Fell bilden<br>(Durchmesser 200 mm, Länge 450 mm, Durchflußtemperatur 50°C)<br><br>Homogenisieren:<br>20 s bei Walzenspalt von 3-4 mm ein Fell bilden lassen, innerhalb von weiteren 40s: 3* links, 3* rechts einschneiden und umklappen sowie<br>3* bei engem Walzenspalt (3 mm) stürzen und<br>anschließend ein Fell ausziehen. |
| Batch-Temp. | <110°C |

Das allgemeine Verfahren zur Herstellung von Kautschukmischungen und deren Vulkanisate ist in "Rubber Technology Handbook", W. Hofmann, Hanser Verlag 1994 beschrieben.
Die gummitechnische Prüfung erfolgt gemäß den in Tabelle 4 angegebenen Prüfmethoden.

**Tabelle 4:**

| Physikalische Testung | Norm/ Bedingungen |
|---|---|
| ML 1+4, 100°C (3. Stufe) | DIN 53523/3, ISO 667 |
| Zugversuch am Ring, 23°C Spannungswerte | DIN 53504, ISO 37 |
| Dispersionskoeffizient (Topographie) | s. "Bestimmung des Dispersionskoeffizienten |
| Viskoelastische Eigenschaften 0 und 60°C, 16 Hz, 50 N Vorkraft und 25 N Amplitudenkraft Komplexer Modul E* (MPa) | DIN 53 513, ISO 2856 |

**Bestimmung des Dispersionskoeffizienten**

Der Dispersionskoeffizient läßt sich mittels einer topographischen Methode, beschrieben unter: "Entwicklung eines Verfahrens zur Charakterisierung der Füllstoffdispersion in Gummimischungen mittels einer Oberflächentopographie" A. Wehmeier; Diplomarbeit 1998 an der Fachhochschule Münster, Abteilung Steinfurt im Fachbereich Chemieingenieurwesen und "Filler dispersion Analysis by Topography Measurements" Degussa AG, Applied Technology Advanced Fillers, Technical Report TR 820, bestimmen.
Alternativ kann der Dispersionskoeffizient auch mittels dem DIAS Verfahren (lichtoptisch) am Deutschen Institut für Kautschuktechnologie in Hannover bestimmt werden (siehe H. Geisler, DIK aktuell, 1. Ausgabe (1997) und Medalia, Rubber Age, April 1965).
Der beste erreichbare Dispersionsgrad liegt bei 100 %, der theoretisch schlechteste würde demnach bei 0 % liegen. Kieselsäuren mit einem Dispersionskoeffizienten von größer oder gleich 90 % sind als hoch dispersibel (HD) einzustufen.
Erläuterung zur Bestimmung des Dispersionskoeffizienten mittels Oberflächentopographie:

$$Dispersionskoeffizient = 100\,\% - \frac{(Summe\,der Peakgrundflächen) \bullet 10000\,\% \bullet Medaliafaktor}{Füllstoffvolumen \bullet (untersuchte Gesamtfläche)}\,\%$$

$$Medaliafaktor = \frac{\frac{Füllstoffvolumen}{100\,\%} + 0{,}78}{2}$$

Dispersionskoeffizient in %
Summe der Peakgrundflächen (Maß für die Rauheit) in $mm^2$
Füllstoffvolumen in %
untersuchte Gesamtfläche in $mm^2$

In der Tabelle 5 sind die gummitechnischen Daten für Rohmischung und Vulkanisat angegeben.

Tabelle 5:

| | Referenzkautschukmischung I "in situ" | Referenzkautschukmischung II, enthaltend Abmischung 1 | Referenzkautschukmischung III, enthaltend Abmischung 2 | Erf.Kautschukmischung II, enthaltend erf.Abmischung 3 | Erf.Kautschukmischung III, enthaltend erf.Abmischung 4 |
|---|---|---|---|---|---|
| Rohmischungsergebnisse | | | | | |
| ML(1+4) bei 100°C, 1.Stufe [ME] | 114 | 129 | 102 | 96 | 107 |
| Vulkanisatergebnisse | | | | | |
| Spannungswert 100% [MPa] | 2,1 | 2,3 | 2,6 | 3,0 | 2,8 |
| Spannungswert 300% [MPa] | 11,9 | Nicht meßbar | 12,5 | 13,3 | 12,8 |
| MTS, 16Hz, 50N Vorkraft, 25N Ampl.kraft 0°C [MPa] | 14,8 | 14,0 | 20,1 | 33,5 | 30,8 |
| MTS, 16Hz, 50N Vorkraft, 25N Ampl.kraft 60°C [MPa] | 7,5 | 7,9 | 9,1 | 10,9 | 11,3 |
| Dispersion (Topographie) [%] | 1,5 | 7,0 | 1,0 | 2,0 | 1,7 |

Die Kautschukmischungen enthaltend die erfindungsgemäßen Mercaptosilan-Polymer-Abmischungen zeigen ein verbessertes Verarbeitungsverhalten (niedigere Mooney-Viskositäten in der 1. Mischstufe), verbessertes Verstärkungsverhalten (höhere Moduli), verbesserte dynamische Steifigkeit und exzellenter Dispersion gegenüber der isomolaren in-situ Mischung bzw. Mercaptosilan-Polymer-Abmischung mit Polyamid.

## Patentansprüche

1. Mercaptosilan-Polymer-Abmischung, **dadurch gekennzeichnet, dass** diese mindestens ein Mercaptosilan der allgemeinen Formel I

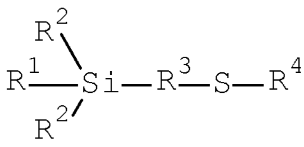

I,

wobei $R^1$ eine Alkylpolyethergruppe $-O-(R^5-O)_m-R^6$ ist, mit $R^5$ gleich oder verschieden, eine verzweigte oder unverzweigte, gesättigte oder ungesättigte, aliphatische zweibindige C1-C30 Kohlenwasserstoffgruppe, m im Mittel 1 bis 30 ist, und $R^6$ aus mindestens 1 C-Atomen besteht und eine unsubstituierte oder substituierte, verzweigte oder unverzweigte einbindige Alkyl-, Alkenyl, Aryl oder Aralkylgruppe ist,
$R^2$ gleich oder verschieden und eine $R^1$-, C1-C12-Alkyl- oder $R^7O$-Gruppe ist, mit $R^7$ gleich H, Methyl, Ethyl, Propyl, C9-C30 verzweigten oder unverzweigten einbindigen Alkyl-, Alkenyl-, Aryl-, Aralkylgruppe oder $(R^8)_3Si$-Gruppe, mit $R^8$ gleich C1-C30 verzweigte oder unverzweigte Alkyl- oder Alkenyl-Gruppe,
$R^3$ eine verzweigte oder unverzweigte, gesättigte oder ungesättigte, aliphatische, aromatische oder gemischt aliphatische /aromatische zweibindige C1-C30 Kohlenwasserstoffgruppe und
$R^4$ gleich H, CN oder $(C=O)-R^9$ ist, mit $R^9$ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe,
und mindestens ein Polymer, ausgewählt aus der Gruppe Polypropylen, Polyethylen oder Mischungen der vorgenannten Polymeren,
enthält.

2. Mercaptosilan-Polymer-Abmischung gemäß Anspruch 1, **dadurch gekennzeichnet, dass** diese ein Gemisch von Mercaptosilanen der allgemeinen Formel I enthält.

3. Mercaptosilan-Polymer-Abmischung gemäß Anspruch 2, **dadurch gekennzeichnet, dass** das Gemisch von Mercaptosilanen der allgemeinen Formel I

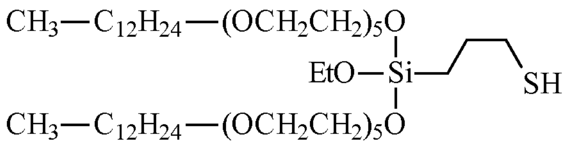

und

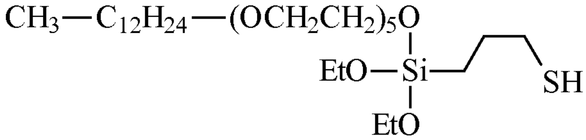

enthält.

4. Mercaptosilan-Polymer-Abmischung gemäß einem der Ansprüche 1-3, **dadurch gekennzeichnet, dass** das Mercaptosilan der allgemeinen Formel I oder Gemisch von Mercaptosilanen der allgemeinen Formel I zusätzlich Hydrolyse- und/oder Kondensationsprodukte der Mercaptosilane der allgemeinen Formel I enthält.

5. Mercaptosilan-Polymer-Abmischung gemäß einem der Ansprüche 1-3, **dadurch gekennzeichnet, dass** das Polymer ein Molekulargewicht von 50.000-1.000.000 g/mol hat (GPC DIN EN ISO 16014.5).

6. Mercaptosilan-Polymer-Abmischung gemäß einem der Ansprüche 1-3, **dadurch gekennzeichnet, dass** das Polymer eine Schüttdichte von 80 - 150 kg/$m^3$ hat (DIN EN ISO 60) .

7. Verfahren zur Herstellung von Mercaptosilan-Polymer-Abmischung gemäß Anspruch 1, **dadurch gekennzeichnet, dass** man mindestens ein Mercaptosilane der allgemeinen Formel I mit mindestens einem Polymer, ausgewählt aus der Gruppe Polypropylen, Polyethylen oder Mischungen der vorgenannten Polymeren, mischt.

8. Verfahren zur Herstellung von Mercaptosilan-Polymer-Abmischung gemäß Anspruch 7, **dadurch gekennzeichnet, dass** man zum Mischen einen Pflugscharmischer einsetzt.

9. Verwendung der Mercaptosilan-Polymer-Abmischung gemäß Anspruch 1 zur Herstellung von Kautschukmischungen.

10. Kautschukmischung, **dadurch gekennzeichnet, daß** diese

   (A) mindestens einen Kautschuk,
   (B) mindestens einen Füllstoff und
   (C) mindestens eine Mercaptosilan-Polymer-Abmischung gemäß Anspruch 1

   enthält.

11. Verfahren zur Herstellung der Kautschukmischung gemäß Anspruch 10, **dadurch gekennzeichnet, daß** man mindestens einen Kautschuk, mindestens einen Füllstoff, mindestens ein Mercaptosilan-Polymer-Abmischung gemäß Anspruch 1 und gegebenenfalls weitere Kautschukhilfsmittel in einem Mischaggregat mischt.

12. Verwendung von Mercaptosilan-Polymer-Abmischung gemäß Anspruch 1 zur Herstellung von Formkörpern.

13. Verwendung von Mercaptosilan-Polymer-Abmischung gemäß Anspruch 1 in Reifen, Reifenlaufflächen, Kabelmänteln, Schläuchen, Treibriemen, Förderbändern, Walzenbelägen, Schuhsohlen, Dichtungsringen und Dämpfungselementen.

## Claims

1. Mercaptosilane-polymer blend, **characterized in that** this comprises at least one mercaptosilane of the general formula I

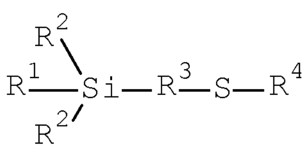

I,

where $R^1$ is an alkyl polyether group -O-($R^5$-O)$_m$-$R^6$, where $R^5$ is identical or different and is a branched or unbranched, saturated or unsaturated, aliphatic divalent C1-C30 hydrocarbon group, m is on average from 1 to 30, and $R^6$ is composed of at least 1 C atom and is an unsubstituted or substituted, branched or unbranched monovalent alkyl, alkenyl, aryl or aralkyl group, $R^2$ is identical or different and is an $R^1$, C1-C12-alkyl or $R^7$O group, where $R^7$ is H, methyl, ethyl, propyl, C9-C30 branched or unbranched monovalent alkyl, alkenyl, aryl, or aralkyl group or $(R^8)_3$Si group, where $R^8$ is C1-C30 branched or unbranched alkyl or alkenyl group, $R^3$ is a branched or unbranched, saturated or unsaturated, aliphatic, aromatic or mixed aliphatic/aromatic divalent C1-C30 hydrocarbon group and $R^4$ is H, CN or (C=O) -$R^9$, where $R^9$ is a branched or unbranched, saturated or unsaturated, aliphatic, aromatic or mixed aliphatic/aromatic monovalent C1-C30 hydrocarbon group, and at least one polymer selected from the group of polypropylene, polyethylene and mixtures of the abovementioned polymers.

**2.** Mercaptosilane-polymer blend according to Claim 1, **characterized in that** this comprises a mixture of mercaptosilanes of the general formula I.

**3.** Mercaptosilane-polymer blend according to Claim 2, **characterized in that** the mixture of mercaptosilanes of the general formula (I) comprises

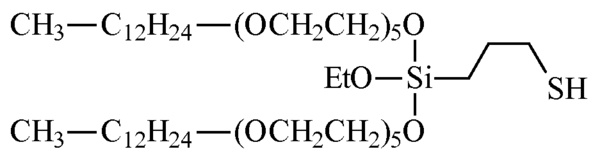

and

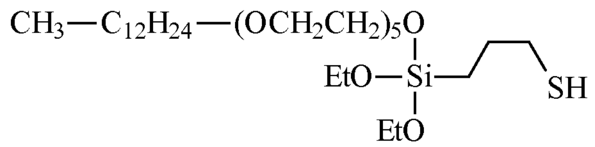

**4.** Mercaptosilane-polymer blend according to any of Claims 1-3, **characterized in that** the mercaptosilane of the general formula I or mixture of mercaptosilanes of the general formula I also comprises products of the hydrolysis and/or condensation of the mercaptosilanes of the general formula I.

**5.** Mercaptosilane-polymer blend according to any of Claims 1-3, **characterized in that** the molecular weight of the polymer is from 50 000-1 000 000 g/mol (GPC DIN EN ISO 16014.5).

**6.** Mercaptosilane-polymer blend according to any of Claims 1-3, **characterized in that** the bulk density of the polymer is from 80 - 150 $kg/m^3$ (DIN EN ISO 60).

**7.** Process for the production of mercaptosilane-polymer blend according to Claim 1, **characterized in that** at least one mercaptosilane of the general formula I is mixed with at least one polymer selected from the group of polypropylene, polyethylene and mixtures of the abovementioned polymers.

**8.** Process for the production of mercaptosilane-polymer blend according to Claim 7, **characterized in that** a ploughshare mixer is used for the mixing process.

**9.** Use of the mercaptosilane-polymer blend according to Claim 1 for the production of rubber mixtures.

**10.** Rubber mixture, **characterized in that** this comprises

(A) at least one rubber,
(B) at least one filler and
(C) at least one mercaptosilane-polymer blend according to Claim 1.

**11.** Process for the production of the rubber mixture according to Claim 10, **characterized in that** at least one rubber, at least one filler, at least one mercaptosilane-polymer blend according to Claim 1 and optionally other rubber auxiliaries are mixed in a mixing assembly.

**12.** Use of mercaptosilane-polymer blend according to Claim 1 for the production of mouldings.

**13.** Use of mercaptosilane-polymer blend according to Claim 1 in tyres, tyre treads, cable sheathing, hoses, drive belts, conveyor belts, roll coverings, shoe soles, sealing rings and damping elements.

## Revendications

1. Mélange mercaptosilane-polymère, **caractérisé en ce qu'**il contient au moins un mercaptosilane de formule générale I :

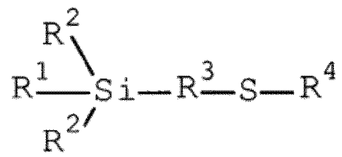

I,

où $R^1$ est un groupe alkylpolyéther -O-($R^5$-O)$_m$-$R^6$, avec $R^5$ représentant des groupes hydrocarbures aliphatiques bivalents en $C_{1-30}$-identiques ou différents, linéaires ou ramifiés, saturés ou insaturés, m étant compris entre 1 et 30, et $R^6$ étant constitué d'au moins un atome de carbone et d'un groupe monovalent alkyle, alcényle, aryle ou arylalkyle, substitué ou non, linéaire ou ramifié,
$R^2$ est identique ou différent et est un groupe $R^1$, $C_{1-12}$-alkyle ou $R^7O$, avec $R^7$ étant H, méthyle, éthyle, propyle, un groupe alkyle, alcényle, aryle, arylalkyle ou $(R^8)_3Si$- en $C_{9-30}$ monovalent linéaire ou ramifié, $R^8$ étant un groupe alkyle ou alcényle linéaire ou ramifié en $C_{1-30}$,
$R^3$ est un groupe hydrocarbure linéaire ou ramifié, saturé ou insaturé, aliphatique, aromatique ou mixe aliphatique/aromatique, bivalent en $C_{1-30}$, et
$R^4$ = H, CN ou (C=O)-$R^9$, $R^9$ étant un groupe hydrocarbure linéaire ou ramifié, saturé ou insaturé, aliphatique, aromatique ou mixe aliphatique/aromatique, monovalent en $C_{1-30}$,
et au moins un polymère choisi dans le groupe du polypropylène, du polyéthylène ou de mélanges de ceux-ci.

2. Mélange mercaptosilane-polymère selon la revendication 1, **caractérisé en ce qu'**il contient un mélange de mercaptosilanes de formule I.

3. Mélange mercaptosilane-polymère selon la revendication 2, **caractérisé en ce que** le mélange de mercaptosilanes de formule générale I contient

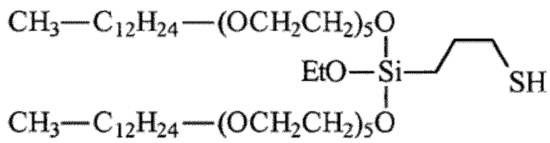

et

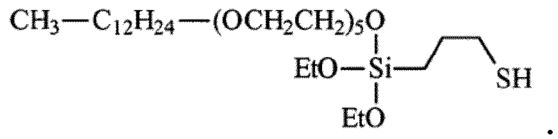

.

4. Mélange mercaptosilane-polymère selon l'une des revendications 1 à 3, **caractérisé en ce que** le mercaptosilane de formule générale I ou le mélange de mercaptosilanes de formule générale I contient en plus des produits d'hydrolyse et/ou des produits de condensation des mercaptosilanes de formule générale I.

5. Mélange mercaptosilane-polymère selon l'une des revendications 1 à 3, **caractérisé en ce que** le polymère a un poids moléculaire de 50 000 à 1 000 000 g/mole (selon la norme GPC DIN EN ISO 16014.5).

6. Mélange mercaptosilane-polymère selon l'une des revendications 1 à 3, **caractérisé en ce que** le polymère a une densité apparente de 80 à 150 kg/$m^3$ (selon la norme DIN EN ISO 60).

7. Procédé de fabrication d'un mélange mercaptosilane-polymère selon la revendication 1, **caractérisé en ce qu'**on mélange au moins un mercaptosilane de formule générale I avec au moins un polymère choisi dans le groupe du polypropylène, du polyéthylène ou de mélanges de ceux-ci.

**8.** Procédé de fabrication d'un mélange mercaptosilane-polymère selon la revendication 7, **caractérisé en ce qu'**on utilise un mélangeur "à socs de charrue".

**9.** Utilisation du mélange mercaptosilane-polymère selon la revendication 1 pour fabriquer des mélanges de caoutchoucs.

**10.** Mélange de caoutchoucs **caractérisé en ce qu'**il contient :

(A) au moins un caoutchouc
(B) au moins une charge, et
(C) au moins un mélange mercaptosilane-polymère selon la revendication 1.

**11.** Procédé de fabrication du mélange de caoutchoucs selon la revendication 10, **caractérisé en ce qu'**on mélange au moins un caoutchouc, au moins une charge, au moins un mélange mercaptosilane-polymère selon la revendication 1 et éventuellement d'autres adjuvants de caoutchouc dans un dispositif de mélange.

**12.** Utilisation d'un mélange mercaptosilane-polymère selon la revendication 1 pour la fabrication d'articles moulés.

**13.** Utilisation d'un mélange mercaptosilane-polymère selon la revendication 1 dans des pneus, des bandes de roulement de pneus, des gaines de câbles, des tuyaux, des courroies de transmission, des tapis roulants, des revêtements de cylindre, des semelles de chaussure, des joints d'étanchéité et des éléments d'amortissement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1285926 A
- EP 1683801 A
- EP 1829922 A
- KR 850000081
- DE 102012205642
- US 7078551 B
- EP 2433812 A1
- EP 2508559 A1
- US 2011034584 A1
- US 3453248 A


### In der Beschreibung aufgeführte Nicht-Patentliteratur


- **W. HOFMANN.** Kautschuktechnologie. Genter Verlag, 1980
- **W. HOFMANN.** Rubber Technology Handbook. Hanser Verlag, 1994
- **A. WEHMEIER.** Entwicklung eines Verfahrens zur Charakterisierung der Füllstoffdispersion in Gummimischungen mittels einer Oberflächentopographie. *Diplomarbeit,* 1998
- **DEGUSSA AG.** Filler dispersion Analysis by Topography Measurements. *Applied Technology Advanced Fillers, Technical Report TR 820*
- **H. GEISLER ; DIK AKTUELL.** Hannover bestimmt werden. 1997
- **MEDALIA.** *Rubber Age,* April 1965